(19) Europäisches Patentamt
European Patent Office
Office européen des brevets

(11) **EP 3 725 861 A1**

(12) **EUROPEAN PATENT APPLICATION**
published in accordance with Art. 153(4) EPC

(43) Date of publication:
**21.10.2020 Bulletin 2020/43**

(21) Application number: **18887765.8**

(22) Date of filing: **12.12.2018**

(51) Int Cl.:
*C09K 5/04* (2006.01)     *F25B 1/00* (2006.01)

(86) International application number:
**PCT/JP2018/045757**

(87) International publication number:
**WO 2019/117213 (20.06.2019 Gazette 2019/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.12.2017 JP 2017237640**

(71) Applicant: **DAIKIN INDUSTRIES, LTD.**
**Osaka 530-8323 (JP)**

(72) Inventors:
• **ITANO, Mitsushi**
**Osaka-shi, Osaka 530-8323 (JP)**

• **OHKUBO, Shun**
**Osaka-shi, Osaka 530-8323 (JP)**
• **KUROKI, Hitomi**
**Osaka-shi, Osaka 530-8323 (JP)**
• **TSUCHIYA, Tatsumi**
**Osaka-shi, Osaka 530-8323 (JP)**
• **GOBOU, Kenji**
**Osaka-shi, Osaka 530-8323 (JP)**

(74) Representative: **Hoffmann Eitle**
**Patent- und Rechtsanwälte PartmbB**
**Arabellastraße 30**
**81925 München (DE)**

(54) **REFRIGERANT CONTAINING CARBON DIOXIDE AND FLUORINATED HYDROCARBON, USE THEREFOR, REFRIGERATING MACHINE PROVIDED WITH SAME, AND OPERATION METHOD FOR SAID REFRIGERATING MACHINE**

(57)     A problem to be solved is to provide a composition containing a refrigerant that satisfies the following four properties: (1) a GWP of 1500 or less, (2) ASHRAE non-flammability, (3) a COP equivalent to that of R410A, and (4) a refrigerating capacity equivalent to that of R410A. As a solution to the problem, provided is a composition containing a refrigerant that contains $CO_2$, R32, R125, and R134a, wherein when the mass% of $CO_2$, R32, R125, and R134a based on their sum in the refrigerant is respectively x, a, b, and c, coordinates (a,b,c) in a ternary composition diagram in which $2.7 \leq x < 6.0$, and the sum of R32, R125, and R134a is (100-x) mass% fall within a triangular region surrounded by line segments that connect point E, point F, and point G, or on the line segments; or coordinates (a,b,c) in a ternary composition diagram in which $6.0 \leq x < 9.0$ fall within a triangular region surrounded by line segments that connect point E, point F, and point G, or on the line segments.

Fig.12

**Description**

Technical Field

The present disclosure relates to a refrigerant containing a fluorinated hydrocarbon and carbon dioxide, use of the refrigerant, a refrigerating machine containing the refrigerant, and a method for operating the refrigerating machine.

Background Art

R410A, which is a two-component mixed refrigerant of difluoromethane ($CH_2F_2$, HFC-32, and R32) and pentafluoroethane ($CF_3CHF_2$, HFC-125, and R125), and is a pseudo-azeotropic refrigerant, is used in refrigerants for freezing or refrigerating purposes. R410A has a GWP of 2088.

In Japan, for example, due to "chlorofluorocarbon law" regulations, refrigerants for condensing units and stationary freezing and refrigerating units must be replaced with refrigerants with a GWP of 1500 or less after the year 2025. Thus, there is demand for the development of novel refrigerants that maintain performance equivalent to that of R410A, while having a low GWP; and a variety of proposals have been reported (PTL 1 to 3).

Citation List

Patent Literature

PTL 1: JPH05-500071
PTL 2: Patent No. 5783341
PTL 3: Patent No. 6062061

Summary of Invention

Technical Problem

The present inventors conceived that a refrigerant composition that has a refrigerating capacity equivalent to that of R410A and a low GWP, as well as ASHRAE non-flammability, had not yet been developed in the art. They conducted studies and determined the desired properties of an alternative refrigerant for R410A on their own accord. The following are the desired properties: (1) a GWP of 1500 or less, (2) ASHRAE non-flammability, (3) a COP equivalent to that of R410A, and (4) a refrigerating capacity equivalent to that of R410A. An object of the present disclosure is to solve this unique problem.

Solution to Problem

The present inventors conducted extensive research to solve the problem, and found that a mixed refrigerant that contains at least one fluorinated hydrocarbon selected from the group consisting of R32, R125, 1,1,1,2-tetrafluoroethane (R134a), 2,3,3,3-tetrafluoropropene (R1234yf), and 1,3,3,3-tetrafluoro-1-propene (R1234ze), and 1 mass% to 12 mass% of $CO_2$ (R744) based on the entire refrigerant has the properties described above.

After conducting further research based on this finding, the inventors completed the present disclosure. The present disclosure includes the following embodiments.

Item 1. A composition comprising a refrigerant,

the refrigerant comprising $CO_2$, R32, R125, and R134a, wherein
when the mass% of $CO_2$, R32, R125, and R134a based on their sum in the refrigerant is respectively x, a, b, and c,
coordinates (a,b,c) in a ternary composition diagram in which $2.7 \leq x < 6.0$, and the sum of R32, R125, and R134a is (100-x) mass% fall within a triangular region surrounded by line segments that connect the following points:

point E ($-0.0781x^2+1.8309x+41.926$, $1.1194x+19.094$, 100-a-b-x),
point F ($-3x+54.4$, $-0.3945x+23.17$, 100-a-b-x), and
point G ($-2.0597x+51.853$, $-2.1514x+27.908$, 100-a-b-x),
or on the line segments, or

coordinates (a,b,c) in a ternary composition diagram in which 6.0≤x<9.0, and the sum of R32, R125, and R134a is (100-x) mass% fall within a triangular region surrounded by line segments that connect the following points:

    point E (x+44.1, 1.0357x+19.593, 100-a-b-x),
    point F (-3x+54.4, -0.4x+23.2, 100-a-b-x), and
    point G (-2.1643x+52.493, -2.1x+27.6, 100-a-b-x), or on the line segments.

Item 2. A composition comprising a refrigerant,

the refrigerant comprising $CO_2$, R32, R125, and R134a, wherein
when the mass% of $CO_2$, R32, R125, and R134a based on their sum in the refrigerant is respectively x, a, b, and c, coordinates (a,b,c) in a ternary composition diagram in which 4.0≤x≤6.0, and the sum of R32, R125, and R134a is (100-x) mass% fall within a triangular region surrounded by line segments that connect the following points:

    point E' (x+38.6, 1.0468x+17.431, 100-a-b-x),
    point F (-3x+54.4, -0.3945x+23.17, 100-a-b-x), and
    point G' (-2.1903x+51.358, -2.142x+30.148, 100-a-b-x), or on the line segments, or

coordinates (a,b,c) in a ternary composition diagram in which 6.0≤x<6.1, and the sum of R32, R125, and R134a is (100-x) mass% fall within a triangular region surrounded by line segments that connect the following points:

    point E' (x+38.6, 1.0468x+17.431, 100-a-b-x),
    point F (-3x+54.4, -0.4x+23.2, 100-a-b-x), and
    point G' (-2.1903x+51.358, -2.142x+30.148, 100-a-b-x), or on the line segments.

Item 3. A composition comprising a refrigerant,

the refrigerant comprising $CO_2$, R32, R125, and R134a, wherein
when the mass% of $CO_2$, R32, R125, and R134a based on their sum in the refrigerant is respectively x, a, b, and c, coordinates (a,b,c) in a ternary composition diagram in which 8.0≤x<9.0, and the sum of R32, R125, and R134a is (100-x) mass% fall within a quadrangular region surrounded by line segments that connect the following points:

    point J (-1.1x+51.1, -3.9x+55.5, 100-a-b-x),
    point K (-0.9x+50.8, -4.3x+57.2, 100-a-b-x),
    point H (-2.9549x+59.61, -0.391x+25.122, 100-a-b-x), and
    point I (-2.0451x+54.79, -2x+33.6, 100-a-b-x),

or on the line segments.

Item 4. A composition comprising a refrigerant,

the refrigerant comprising $CO_2$, R32, R125, and R134a, wherein
when the mass% of $CO_2$, R32, R125, and R134a based on their sum in the refrigerant is respectively x, a, b, and c, coordinates (a,b,c) in a ternary composition diagram in which 6.7≤x<9.0, and the sum of R32, R125, and R134a is (100-x) mass% fall within a quadrangular region surrounded by line segments that connect the following points:

    point L ($1.4749x^2$-25.374x+147.89, $-1.8729x^2$+26.839x-71.649, 100-a-b-x),
    point M ($0.7224x^2$-13.081x+99.713, $-0.8328x^2$+9.8572x-5.0599, 100-a-b-x),
    point H (-2.9549x+59.61, -0.391x+25.122, 100-a-b-x), and
    point I (-2.0451x+54.79, -2x+33.6, 100-a-b-x),

or on the line segments.

Item 5. The composition according to any one of Items 1 to 4, comprising R32, R125, R134a, and $CO_2$ in a total amount of 99.5 mass% or more based on the entire refrigerant.

Item 6. The composition according to any one of Items 1 to 5, comprising a refrigerant oil.

Item 7. The composition according to any one of Items 1 to 6, wherein the refrigerant is used as an alternative refrigerant for R410A.

Item 8. A refrigerating machine comprising the composition according to any one of Items 1 to 7.

Item 9. The refrigerating machine according to Item 8, comprising a heat exchanger in which a flow of the refrigerant and a flow of an external heat medium are in countercurrent flow.

Item 10. The refrigerating machine according to Item 8 or 9, comprising a heat-source-side heat exchanger and a user-side heat exchanger, wherein when the user-side heat exchanger functions as an evaporator, the evaporating temperature of the refrigerant is 0°C or below.

Item 11. A refrigerating machine comprising
a refrigerant comprising

at least one fluorinated hydrocarbon selected from the group consisting of difluoromethane (R32), pentafluoroethane (R125), 1,1,1,2-tetrafluoroethane (R134a), 2,3,3,3-tetrafluoropropene (R1234yf), and 1,3,3,3-tetrafluoro-1-propene (R1234ze), and
carbon dioxide ($CO_2$) ; and

a heat exchanger in which a flow of the refrigerant and a flow of an external heat medium are in countercurrent flow.

Item 12. A refrigerating machine comprising
a refrigerant comprising

at least one fluorinated hydrocarbon selected from the group consisting of difluoromethane (R32), pentafluoroethane (R125), 1,1,1,2-tetrafluoroethane (R134a), 2,3,3,3-tetrafluoropropene (R1234yf), and 1,3,3,3-tetrafluoro-1-propene (R1234ze), and
carbon dioxide ($CO_2$);

a heat-source-side heat exchanger; and
a user-side heat exchanger, wherein when the user-side heat exchanger functions as an evaporator, the evaporating temperature of the refrigerant is 0°C or below.

Advantageous Effects of Invention

The refrigerant according to the present disclosure has the following properties, which are typically required in alternative refrigerants for R410A: (1) a GWP of 1500 or less, (2) ASHRAE non-flammability, (3) a COP equivalent to that of R410A, and (4) a refrigerating capacity equivalent to that of R410A.

Brief Description of Drawings

Fig. 1 is a diagram that illustrates a device used in a flammability test.
Fig. 2 is a schematic view that illustrates examples of countercurrent heat exchangers.
Fig. 3 is a schematic view that illustrates examples of countercurrent heat exchangers. Fig. 3(a) is a plan view, and Fig. 3(b) is a perspective view.
Fig. 4 is a schematic view that illustrates an embodiment of refrigerant circuits in the refrigerating machine according to the present disclosure.
Fig. 5 is a schematic view that illustrates an example of modified versions of the refrigerant circuit of Fig. 4.
Fig. 6 is a schematic view that illustrates an example of modified versions of the refrigerant circuit of Fig. 5.
Fig. 7 is a schematic view that illustrates an example of modified versions of the refrigerant circuit of Fig. 5.
Fig. 8 is a schematic view that describes off-cycle defrost.
Fig. 9 is a schematic view that describes heating defrost.
Fig. 10 is a schematic view that describes reverse-cycle hot-gas defrost.
Fig. 11 is a schematic view that describes normal-cycle hot-gas defrost.
Fig. 12 is a ternary diagram that shows points C, C', D, and D' when the concentration of $CO_2$ is 6 mass%.

Fig. 13 is a ternary diagram that shows points A to G when the concentration of $CO_2$ is 2.7 mass%.
Fig. 14 is a ternary diagram that shows points A to G when the concentration of $CO_2$ is 4 mass%.
Fig. 15 is a ternary diagram that shows points A to G when the concentration of $CO_2$ is 6 mass%.
Fig. 16 is a ternary diagram that shows points A to G when the concentration of $CO_2$ is 8 mass%.
Fig. 17 is a ternary diagram that shows points A to G when the concentration of $CO_2$ is 9 mass%.
Fig. 18 is a ternary diagram that shows points A and B, and E' to G' when the concentration of $CO_2$ is 4 mass%.
Fig. 19 is a ternary diagram that shows points A and B, and E' to G' when the concentration of $CO_2$ is 5 mass%.
Fig. 20 is a ternary diagram that shows points A and B, and E' to G' when the concentration of $CO_2$ is 6 mass%.
Fig. 21 is a ternary diagram that shows points A and B, C' and D', and H to K when the concentration of $CO_2$ is 8 mass%.
Fig. 22 is a ternary diagram that shows points A and B, C' and D', and H to K when the concentration of $CO_2$ is 9 mass%.
Fig. 23 is a ternary diagram that shows points A and B, C' and D', H and I, and L and M when the concentration of $CO_2$ is 6.7 mass%.
Fig. 24 is a ternary diagram that shows points A and B, C' and D', H and I, and L and M when the concentration of $CO_2$ is 8 mass%.
Fig. 25 is a ternary diagram that shows points A and B, C' and D', H and I, and L and M when the concentration of $CO_2$ is 9 mass%.

Description of Embodiments

Definition of Terms

In this specification, the term "refrigerant" includes at least compounds that are specified in ISO817 (International Organization for Standardization), and that are provided a refrigerant number (ASHRAE number) representing the type of refrigerant with R at the beginning; and further includes refrigerants that have properties equivalent to those of such refrigerants, even though a refrigerant number is not provided. Refrigerants are broadly divided into "fluorocarbon-based compounds" and "non-fluorocarbon-based compounds," in terms of the structure of the compounds. "Fluorocarbon-based compounds" include chlorofluorocarbons (CFC), hydrochlorofluorocarbons (HCFC), and hydrofluorocarbons (HFC). "Non-fluorocarbon-based compounds" include propane (R290), propylene (R1270), butane (R600), isobutane (R600a), carbon dioxide (R744), and ammonia (R717).
In the present specification, the phrase "a composition comprising a refrigerant" includes at least the following:

(1) a refrigerant itself (including a mixture of refrigerants);
(2) a composition that further comprises other components, and that can be used in obtaining a working fluid for a refrigerating machine by mixing the composition with at least a refrigerant oil, and
(3) a working fluid for a refrigerating machine that contains a refrigerant oil.

In the present specification, of these three aspects, the composition in item (2) is referred to as a "refrigerant composition" in order to distinguish it from the refrigerant itself, which includes a mixture of refrigerants. The working fluid for a refrigerating machine in item (3) is referred to as a "refrigerant oil-containing working fluid" in order to distinguish it from the "refrigerant composition."
In this specification, when the term "alternative" is used in the context in which the first refrigerant is replaced with the second refrigerant, the first type of "alternative" means that equipment designed for operation using the first refrigerant can be operated using the second refrigerant under optimum conditions, optionally with changes of only a few parts (at least one member of the refrigerant oil, gasket, packing, expansion valve, dryer, and other parts) and equipment adjustment. In other words, this type of alternative means that the same equipment is operated with an alternative refrigerant. Embodiments of this type of "alternative" include "drop-in alternative," "nearly drop-in alternative," and "retrofit," in the order in which the extent of changes and/or adjustment necessary for replacing the first refrigerant with the second refrigerant is smaller.
The term "alternative" also includes the second type of "alternative" that means that equipment designed for operation using the second refrigerant is operated for the same use as the existing use with the first refrigerant, using the second refrigerant. This type of alternative means that the same use is achieved with an alternative refrigerant.
In the present specification, the term "refrigerating machine" refers to machines in general that draw heat from an object or space to make its temperature lower than the temperature of ambient air, and maintain the low temperature. In other words, refrigerating machines refer to conversion machines that gain energy from the outside to do work; and that perform energy conversion, in order to transfer heat from where the temperature is lower to where the temperature is higher.
In the present specification, "non-flammability" in regards to a refrigerant means that a refrigerant is categorized into "Class 1" according to the US ANSI/ASHRAE Standard 34-2013. Specifically, a refrigerant is tested for leakage in storage, transport, and use in accordance with the ANSI/ASHRAE Standard 34-2013 to determine its worst case of fractionation for flammability (WCFF: most flammable formulation); when the WCFF formulation is determined to be non-flammable in the test based on the ASTM E681-2009 (a standard test method for concentration limits of flammability of chemicals (vapors and gases)), the refrigerant is categorized into Class 1.

1. Refrigerant

1.1 Refrigerant Component

The refrigerant according to the present disclosure is a mixed refrigerant that contains at least one fluorinated hydrocarbon selected from the group consisting of difluoromethane (R32), pentafluoroethane (R125), 1,1,1,2-tetrafluoroethane (R134a), 2,3,3,3-tetrafluoropropene (R1234yf), and 1,3,3,3-tetrafluoro-1-propene (R1234ze); and carbon dioxide ($CO_2$ (R744)).

The refrigerant according to the present disclosure has the following desired properties as an alternative refrigerant for R410A: (1) a GWP of 1500 or less, (2) ASHRAE non-flammability, (3) a COP equivalent to that of R410A, and (4) a refrigerating capacity similar to that of R410A.

In addition to the properties descried above, the refrigerant according to the present disclosure, due to its temperature glide, can also have effects in improving energy efficiency and/or refrigerating capacity when used in a refrigerating machine equipped with a heat exchanger in which the flow of the refrigerant and the flow of the external heat medium are in countercurrent flow.

A refrigerant according to the present disclosure that satisfies the following requirement 1-1 or 1-2 is preferable, because such a refrigerant shows ASHRAE non-flammability, a GWP of 1500 or less, and has a refrigerating capacity similar to that of R410A. Below, the mass% of $CO_2$, R32, R125, and R134a based on their sum is respectively referred to as x, a, b, and c.

Requirement 1-1

In a ternary composition diagram in which $2.7 \leq x < 6.0$, and the sum of R32, R125, and R134a is (100-x) mass%, coordinates (a,b,c) fall within a triangular region surrounded by line segments that connect the following points:

point E1 ($-0.0781x^2+1.8309x+41.926$, $1.1194x+19.094$, 100-a-b-x),
point F1 ($-3x+54.4$, $-0.3945x+23.17$, 100-a-b-x), and
point G1 ($-2.0597x+51.853$, $-2.1514x+27.908$, 100-a-b-x),

or on the line segments.

Requirement 1-2

In a ternary composition diagram in which $6.0 \leq x < 9.0$, and the sum of R32, R125, and R134a is (100-x) mass%, coordinates (a,b,c) fall within a triangular region surrounded by line segments that connect the following points:

point E2 ($x+44.1$, $1.0357x+19.593$, 100-a-b-x),
point F2 ($-3x+54.4$, $-0.4x+23.2$, 100-a-b-x), and
point G2 ($-2.1643x+52.493$, $-2.1x+27.6$, 100-a-b-x),

or on the line segments.

It is preferable to further consider safety factors in the ASHRAE non-flammability limit, taking into consideration the purity of individual refrigerants during the production process and/or a margin of error during the mixing process. In this regard, for example, it is preferable to change the formulation of the refrigerants so as to include the non-flammable refrigerant R125 in a larger amount based on the ASHRAE non-flammable formulation. For example, a formulation changed so as to include additional "y" mass% of the non-flammable refrigerant R125 based on the ASHRAE non-flammable formulation is referred to as "ASHRAE non-flammability (+y%)" in this specification.

A refrigerant according to the present disclosure that satisfies the following requirement 2-1 or 2-2 is preferable, because such a refrigerant has a non-flammable formulation that takes into consideration safety factors based on the ASHRAE non-flammable formulation as described above, a GWP of 1500 or less, and a refrigerating capacity similar to that of R410A.

Requirement 2-1

In a ternary composition diagram in which 4.0≤x≤6.0, and the sum of R32, R125, and R134a is (100-x) mass%, coordinates (a,b,c) fall within a triangular region surrounded by line segments that connect the following points:

    point E1' (x+38.6, 1.0468x+17.431, 100-a-b-x),
    point F1 (-3x+54.4, -0.3945x+23.17, 100-a-b-x), and
    point G1' (-2.1903x+51.358, -2.142x+30.148, 100-a-b-x),

or on the line segments.

Requirement 2-2

In a ternary composition diagram in which 6.0≤x<6.1, and the sum of R32, R125, and R134a is (100-x) mass%, coordinates (a,b,c) fall within a triangular region surrounded by line segments that connect the following points:

    point E2' (x+38.6, 1.0468x+17.431, 100-a-b-x),
    point F2 (-3x+54.4, -0.4x+23.2, 100-a-b-x), and
    point G2' (-2.1903x+51.358, -2.142x+30.148, 100-a-b-x),

or on the line segments.

A refrigerant according to the present disclosure that satisfies the following requirement 3 is preferable, because such a refrigerant has a non-flammable formulation that takes into consideration safety factors based on the ASHRAE non-flammable formulation as described above, and shows a GWP of 1500 or less, a refrigerating capacity similar to that of R410A, and a compressor outlet pressure similar to that of R410A.

Requirement 3

In a ternary composition diagram in which 8.0≤x<9.0, and the sum of R32, R125, and R134a is (100-x) mass%, coordinates (a,b,c) fall within a quadrangular region surrounded by line segments that connect the following points:

    point J (-1.1x+51.1, -3.9x+55.5, 100-a-b-x),
    point K (-0.9x+50.8, -4.3x+57.2, 100-a-b-x),
    point H (-2.9549x+59.61, -0.391x+25.122, 100-a-b-x), and
    point I (-2.0451x+54.79, -2x+33.6, 100-a-b-x),

or on the line segments.

A refrigerant according to the present disclosure that satisfies the following requirement 4 is preferable, because such a refrigerant has a non-flammable formulation that takes into consideration safety factors based on the ASHRAE non-flammable formulation as described above, and shows a GWP of 1500 or less, a refrigerating capacity similar to that of R410A, and a compressor outlet pressure similar to that of R410A.

Requirement 4

In a ternary composition diagram in which 6.7≤x<9.0, and the sum of R32, R125, and R134a is (100-x) mass%, coordinates (a,b,c) fall within a quadrangular region surrounded by line segments that connect the following points:

    point L ($1.4749x^2-25.374x+147.89$, $-1.8729x^2+26.839x-71.649$, 100-a-b-x),
    point M ($0.7224x^2-13.081x+99.713$, $-0.8328x^2+9.8572x-5.0599$, 100-a-b-x),
    point H (-2.9549x+59.61, -0.391x+25.122, 100-a-b-x), and
    point I (-2.0451x+54.79, -2x+33.6, 100-a-b-x),

or on the line segments.

The refrigerant according to the present disclosure may further contain other additional one or more refrigerants and/or unavoidable impurities in addition to R32, R125, R134a, R1234yf, and $CO_2$, as long as the properties and effects described above are not impaired. It is preferred that the refrigerant according to the present disclosure contain R32, R125, R134a, R1234yf, and $CO_2$ in a total amount of 99.5 mass% or more based on the entire refrigerant. In this case, the total amount of other additional one or more refrigerants and unavoidable impurities is 0.5 mass% or less based on the entire refrigerant. The refrigerant contains R32, R125, R134a, R1234yf, and $CO_2$ in a total amount of more preferably 99.75 mass% or more, and still more preferably 99.9 mass% or more based on the entire refrigerant.

Additional refrigerants are not limited, and can be selected from a wide range of refrigerants. A single, or two or more mixed refrigerants may be added as additional refrigerants.

1.2 Application

The refrigerant according to the present disclosure can be suitably used in (A) a refrigerating machine equipped with a heat exchanger in which the flow of the refrigerant and the flow of the external heat medium are in countercurrent flow; and/or (B) a refrigerating machine equipped with a heat-source-side heat exchanger and a user-side heat exchanger, with the evaporating temperature of the refrigerant being 0°C or below when the user-side heat exchanger functions as an evaporator. Details of these specific refrigerating machines (A) and (B) are described later.

The refrigerant according to the present disclosure is suitable for use as an alternative refrigerant for R410A.

2. Refrigerant Composition

The refrigerant composition according to the present disclosure comprises at least the refrigerant according to the present disclosure, and can be used for the same use as the refrigerant according to the present disclosure. Moreover, the refrigerant composition according to the present disclosure can be further mixed with at least a refrigeration oil to thereby obtain a working fluid for a refrigerating machine.

The refrigerant composition according to the present disclosure further comprises at least one other component in addition to the refrigerant according to the present disclosure. The refrigerant composition according to the present disclosure may optionally comprise at least one of the following other components. As described above, when the refrigerant composition according to the present disclosure is used as a working fluid in a refrigerating machine, it is generally used as a mixture with at least a refrigeration oil. Therefore, it is preferred that the refrigerant composition according to the present disclosure does not substantially comprise a refrigeration oil. Specifically, in the refrigerant composition according to the present disclosure, the content of the refrigeration oil based on the entire refrigerant composition is preferably 0 to 1 mass%, and more preferably 0 to 0.1 mass%.

2.1. Water

The refrigerant composition according to the present disclosure may comprise a small amount of water. The water content in the refrigerant composition is preferably 0.1 parts by mass or less, per 100 parts by mass of the refrigerant. A small amount of water contained in the refrigerant composition stabilizes the double bonds in the molecules of unsaturated fluorocarbon compounds that can be present in the refrigerant; and makes it less likely for the unsaturated fluorocarbon compounds to be oxidized, thus increasing the stability of the refrigerant composition.

2.2. Tracer

A tracer is added to the refrigerant composition according to the present disclosure at a detectable concentration such that when the refrigerant composition has been diluted, contaminated, or undergone other changes, the tracer can trace the changes.

The refrigerant composition according to the present disclosure may comprise a single tracer, or two or more tracers.

The tracer is not limited, and can be suitably selected from typically used tracers.

Examples of tracers include hydrofluorocarbons, deuterated hydrocarbons, deuterated hydrofluorocarbons, perfluorocarbons, fluoroethers, brominated compounds, iodinated compounds, alcohols, aldehydes, ketones, and nitrous oxide ($N_2O$). The tracer is particularly preferably a hydrofluorocarbon or a fluoroether.

2.3. Ultraviolet Fluorescent Dye

The refrigerant composition according to the present disclosure may comprise a single ultraviolet fluorescent dye, or two or more ultraviolet fluorescent dyes.

The ultraviolet fluorescent dye is not limited, and can be suitably selected from typically used ultraviolet fluorescent dyes.

Examples of ultraviolet fluorescent dyes include naphthalimide, coumarin, anthracene, phenanthrene, xanthene, thioxanthene, naphthoxanthene, fluorescein, and derivatives thereof. The ultraviolet fluorescent dye is particularly preferably either naphthalimide or coumarin, or both.

2.4. Stabilizer

The refrigerant composition according to the present disclosure may comprise a single stabilizer, or two or more stabilizers.

The stabilizer is not limited, and can be suitably selected from typically used stabilizers.

Examples of stabilizers include nitro compounds, ethers, and amines.

Examples of nitro compounds include aliphatic nitro compounds, such as nitromethane and nitroethane; and aromatic nitro compounds, such as nitro benzene and nitro styrene.

Examples of ethers include 1,4-dioxane.

Examples of amines include 2,2,3,3-pentafluoropropylamine, and diphenylamine.

Examples of stabilizers also include butylhydroxyxylene and benzotriazole.

The content of the stabilizer is not limited. Typically, the content of the stabilizer is preferably 0.01 to 5 parts by mass, and more preferably 0.05 to 2 parts by mass, per 100 parts by mass of the refrigerant.

2.6. Polymerization Inhibitor

The refrigerant composition according to the present disclosure may comprise a single polymerization inhibitor, or two or more polymerization inhibitors.

The polymerization inhibitor is not limited, and can be suitably selected from typically used polymerization inhibitors.

Examples of polymerization inhibitors include 4-methoxy-1-naphthol, hydroquinone, hydroquinone methyl ether, dimethyl-t-butylphenol, 2,6-di-tert-butyl-p-cresol, and benzotriazole.

The content of the polymerization inhibitor is not limited. Typically, the content of the polymerization inhibitor is preferably 0.01 to 5 parts by mass, and more preferably 0.05 to 2 parts by mass, per 100 parts by mass of the refrigerant.

3. Refrigerant Oil-Containing Working Fluid

The refrigerant oil-containing working fluid according to the present disclosure comprises at least the refrigerant or refrigerant composition of the present disclosure, and a refrigerant oil; and is used as a working fluid for a refrigerating machine. Specifically, the refrigerant oil-containing working fluid of the present disclosure is obtained by mixing a refrigerant oil for use in a compressor of a refrigerating machine with the refrigerant or refrigerant composition. The refrigerant oil-containing working fluid typically comprises 10 to 50 mass% of a refrigerant oil.

3.1 Refrigerant Oil

The composition according to the present disclosure may comprise only one refrigerant oil, or two or more refrigerant oils.

The refrigerant oil is not limited, and can be suitably selected from typically used refrigerant oils. When doing so, a refrigerant oil that is superior, for example, in miscibility with the mixture and action of improving the stability of the mixture can be suitably selected, as necessary.

The base oil of the refrigerant oil is preferably, for example, at least one member selected from the group consisting of polyalkylene glycols (PAG), polyol esters (POE), and polyvinyl ethers (PVE).

The refrigerant oil may further contain an additive in addition to the base oil. The additive may be at least one member selected from the group consisting of antioxidants, extreme-pressure additives, acid scavengers, oxygen scavengers, copper deactivators, rust inhibitors, oil agents, and antifoaming agents.

The refrigerant oil preferably has a kinematic viscosity of 5 to 400 cSt at 40°C, from the standpoint of lubrication.

The refrigerant oil-containing working fluid according to the present disclosure may further optionally comprise at least one additive. Examples of additives include the following compatibilizing agent.

3.2 Compatibilizing Agent

The refrigerant oil-containing working fluid according to the present disclosure may comprise only one compatibilizing agent, or two or more compatibilizing agents.

The compatibilizing agent is not limited, and can be suitably selected from typically used compatibilizing agents.

Examples of compatibilizing agents include polyoxyalkylene glycol ethers, amides, nitriles, ketones, chlorocarbons, esters, lactones, aryl ethers, fluoroethers, and 1,1,1-trifluoroalkanes. The compatibilizing agent is particularly preferably a polyoxyalkylene glycol ether.

3. Refrigerating Machine

Below, refrigerating machines according to embodiments of the present disclosure are described with reference to drawings. The use of the refrigerant according to the present disclosure in these refrigerating machines can provide the excellent effects described above. Thus, the refrigerant according to the present disclosure is particularly suitable for use in these refrigerating machines.

3.1 Refrigerating Machine (A)

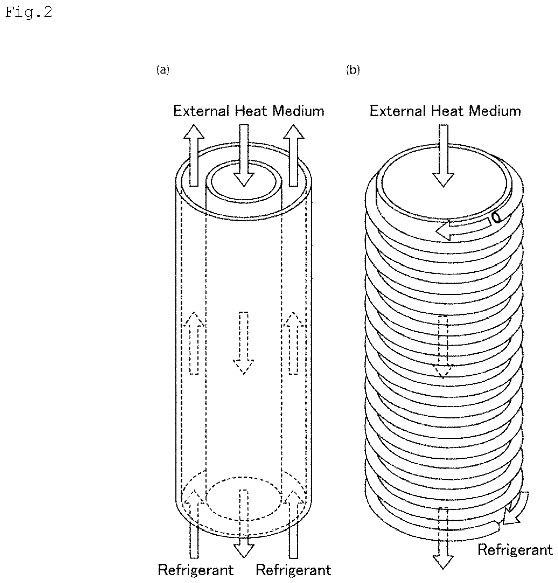

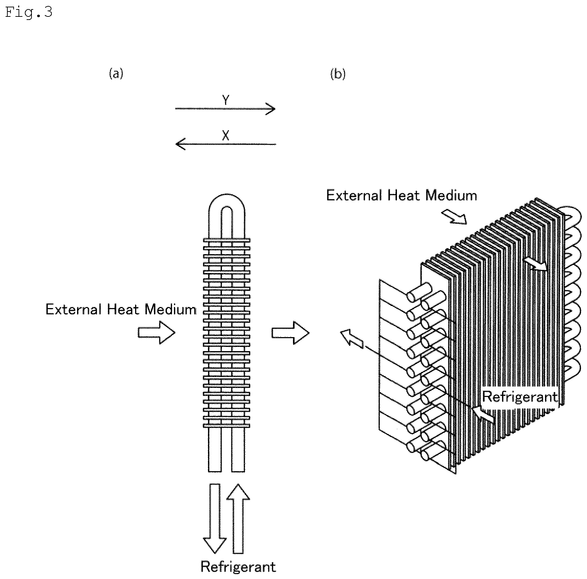

A refrigerating machine (A) comprises a countercurrent heat exchanger in which the flow of the refrigerant and the flow of the external heat medium are in countercurrent flow. "Countercurrent" means that the flow of a refrigerant is opposite to the flow of an external heat medium in a heat exchanger (i.e., the refrigerant flows from downstream to upstream in the direction in which the external heat medium flows); and thus differs from concurrent, in which the flow of the refrigerant is in the forward direction of the flow of the external heat medium (the refrigerant flows from upstream to downstream in the direction in which the external heat medium flows).
Specifically, when the external heat medium is water, a double-pipe heat exchanger as illustrated in Fig. 2(a) may be used as a heat exchanger. For example, the external heat medium is allowed to flow from one side to the other through an inner pipe P1 of the double pipe (from upstream to downstream in Fig. 2(a), and the refrigerant is allowed to flow through an outer pipe P2 from the other side to the one side (from downstream to upstream in Fig. 2(a)); this makes the flow of the refrigerant countercurrent with the flow of the external heat medium. When a cylindrical pipe P3 wound with a spiral pipe P4 on its outer circumference as illustrated in Fig. 2(b) is used as a heat exchanger, the external heat medium is allowed to flow through the cylindrical pipe P3, for example, from one side to the other (from upstream to downstream in Fig. 2(b)), and the refrigerant is allowed to flow through the spiral pipe P4 from the other side to the one side (from downstream to upstream in Fig. 2(b)); this makes the flow of the refrigerant countercurrent with the flow of the external heat medium. Additionally, known heat exchangers in which the refrigerant flows in the direction opposite to the flow of the external heat medium, such as a plate heat exchanger (not shown), are also usable.
When the external heat medium is air, a finned tube heat exchanger as illustrated in Fig. 3 may be used as a heat exchanger. The finned tube heat exchanger comprises a plurality of fins F that are arranged at a predetermined interval, and a heat transfer tube P5 that appears winding in a planar view. The heat transfer tube P5 is provided such that multiple straight portions (two portions in Fig. 3) of the heat transfer tube P5 that are in parallel to each other pass through the plurality of fins F. Of the two ends of the heat transfer tube P5, one end serves as an inlet for the refrigerant, and the other serves as an outlet for the refrigerant. Allowing a refrigerant to flow from downstream to upstream as indicated by arrow X in Fig. 3 in the direction of air flow Y makes the flow of the refrigerant countercurrent with the flow of the external heat medium.
The refrigerant according to the present disclosure is a zeotropic composition, and the temperature of the heat medium increases or decreases during isobaric evaporation or condensation.
A refrigeration cycle that involves temperature change (temperature glide) during evaporation or condensation is called a "Lorenz cycle." In a Lorenz cycle, when the evaporator and the condenser that function as a heat exchanger for exchanging heat are of countercurrent type, this decreases the difference in the temperature of the refrigerant between during evaporation and during condensation. However, a difference in temperature sufficiently large to effectively transfer heat is maintained between the refrigerant and the external heat medium, enabling efficient heat exchange. Another advantage of refrigerating machines equipped with a countercurrent heat exchanger is the minimum difference in pressure. Thus, the use of the refrigerant according to the present disclosure in a countercurrent refrigerating machine improves energy efficiency and/or capacity, as compared with the use of the refrigerant in conventional refrigerating machines.

3.2 Refrigerating Machine (B)

A refrigerating machine (B) comprises a heat-source-side heat exchanger and a user-side heat exchanger, with the evaporating temperature of the refrigerant being 0°C or below when the user-side heat exchanger functions as an evaporator. The evaporating temperature of the refrigerant can be measured by detecting the temperature of the refrigerant at the outlet of the user-side heat exchanger. The heat exchanger of the refrigerating machine (B) does not have to be of countercurrent type.

3.3 A Combination of Refrigerating Machines (A) and (B)

In the present disclosure, a refrigerating machine that has the characteristics of both the refrigerating machine (A) and the refrigerating machine (B) may be used. Specifically, a refrigerating machine is usable that comprises a countercurrent heat exchanger in which the flow of the refrigerant and the flow of the external heat medium are in countercurrent flow, with the evaporating temperature of the refrigerant being 0°C or below when the heat exchanger functions as an evaporator.

The refrigerating machine according to the present disclosure can be suitably used as a shipping refrigerating machine provided to shipping containers for overland or marine transport, or as a showcase refrigerating machine provided to refrigerating showcases or freezing showcases installed in shops.

3.4 More Detailed Structure of Refrigerating Machine

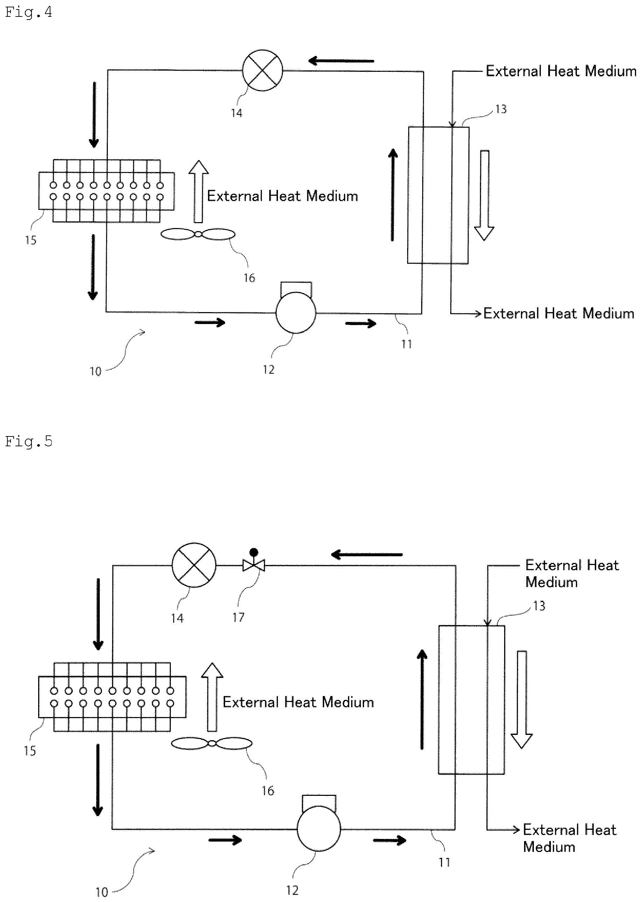

The refrigerating machines (A) and (B) may comprise a refrigerant circuit that includes a compressor, a heat-source-side heat exchanger, an expansion mechanism, and a user-side heat exchanger in this order. Fig. 4 illustrates an embodiment of the refrigerant circuit in a refrigerating machine 10. A refrigerant circuit 11 mainly includes a compressor 12, a heat-source-side heat exchanger 13, an expansion mechanism 14, and a user-side heat exchanger 15; and is configured such that these devices 12 to 15 and other devices are sequentially connected. The refrigerant circuit 11 uses the mixture of fluorinated hydrocarbons described above as a refrigerant; the refrigerant circulates in the direction of the solid-line arrow in Fig. 4.

The compressor 12 is a device that compresses a low-pressure gas refrigerant, and ejects a high-temperature high-pressure gas refrigerant; the compressor 12 is installed in a space outside the machine, or in an outdoor space. The high-pressure gas refrigerant ejected from the compressor 12 is supplied to the heat-source-side heat exchanger 13.

The heat-source-side heat exchanger 13 is a device that condenses (liquefies) the high-temperature high-pressure gas refrigerant compressed in the compressor 12; and is installed in a space outside the machine, or in an outdoor space. The high-pressure liquid refrigerant ejected from the heat-source-side heat exchanger 13 passes through the expansion mechanism 14.

The expansion mechanism 14 is a device that depressurizes the high-pressure liquid refrigerant that released heat in the heat-source-side heat exchanger 13 to a low pressure in a refrigeration cycle; and is installed in a space inside the machine, or in an indoor space. The expansion mechanism 14 for use may be, for example, an electronic expansion valve; and is preferably a thermostatic expansion valve, as illustrated in Fig. 5. A thermostatic expansion valve used as the expansion mechanism 14 enables the detection of the refrigerant temperature after the user-side heat exchanger 15 by a thermostatic cylinder directly connected to the expansion valve, and controls the aperture of the expansion valve based on the detected refrigerant temperature. Thus, for example, when the user-side heat exchanger 15, an expansion valve, and a thermostatic cylinder are provided inside the user-side unit, control of the expansion valve is completed inside the user-side unit. This eliminates the need for communications in regards to the expansion valve between the heat-source-side unit provided with the heat-source-side heat exchanger 13 and the user-side unit, leading to low costs and reduced work. Note that when a thermostatic expansion valve is used as the expansion mechanism 14, an electromagnetic valve 17 is provided to the expansion mechanism 14 on the heat-source-side heat exchanger 13 side. The low-pressure liquid refrigerant that has passed through the expansion mechanism 14 is supplied to the user-side heat exchanger 15.

The user-side heat exchanger 15 is a device that evaporates (vaporizes) the low-pressure liquid refrigerant; and is installed in a space inside the machine, or in an indoor space. The low-pressure gas refrigerant ejected from the user-side heat exchanger 15 is supplied to the compressor 12, and recirculates the refrigerant circuit 11.

In the refrigerating machine, the heat-source-side heat exchanger 13 functions as a condenser, and the user-side heat exchanger 15 functions as an evaporator.

In the refrigerating machine (A), two heat exchangers (heat-source-side heat exchanger 13 and user-side heat exchanger 15) are of a countercurrent heat exchanger. In Figs. 4 and 5, and Figs. 6 to 11, which are explained below, the heat-source-side heat exchanger 13 is configured as a heat exchanger using water as an external heat medium (e.g., a double-pipe heat exchanger), and the user-side heat exchanger 15 is configured as a heat exchanger using air as an external heat medium (e.g., a finned tube heat exchanger); however, exchangers 13 and 15 are not limited to these exchangers. The heat-source-side heat exchanger 13 may be configured as a heat exchanger using air as an external heat medium, and the user-side heat exchanger 15 may be configured as a heat exchanger using water as an external heat medium. Alternatively, the heat-source-side heat exchanger 13 and the user-side heat exchanger 15 may both be configured as a heat exchanger using air as an external heat medium, or as a heat exchanger using water as an external heat medium.

In the refrigerating machine (B), the evaporating temperature of the refrigerant is 0°C or below when the user-side heat exchanger 15 functions as an evaporator. In the refrigerating machine (B), the heat-source-side heat exchanger 13 and the user-side heat exchanger 15 do not have to be of countercurrent type.

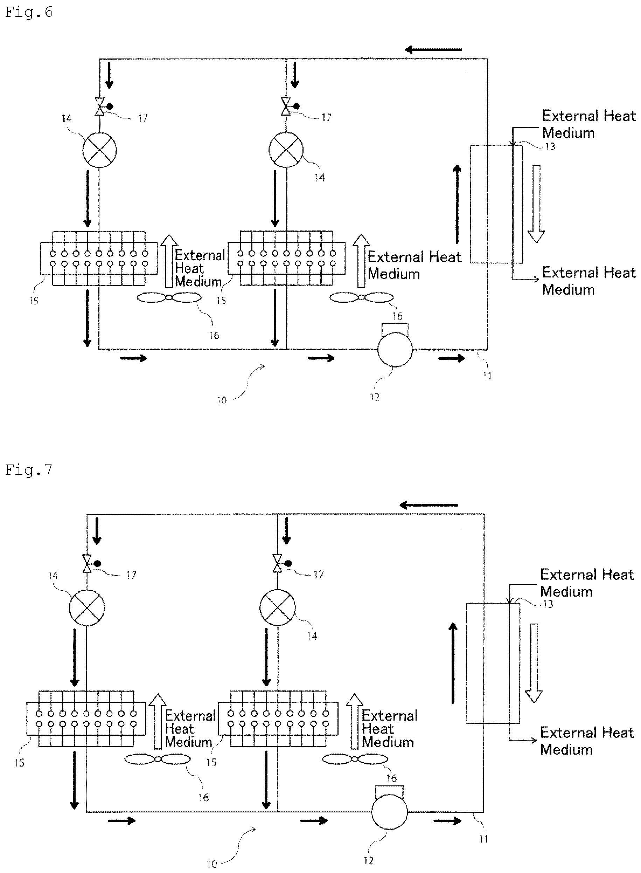

In the refrigerating machine 10 configured as described above, the refrigerant circuit 11, as illustrated in Fig. 6, may have a plurality of expansion mechanisms 14 and a plurality of user-side heat exchangers 15 (two for each in Fig. 6) arranged in parallel.

In the refrigerating machine 10 configured as described above, the refrigerant circuit 11, as illustrated in Fig. 7, may further comprise a four-way switching valve 18 that switches the flow of the high-temperature high-pressure gas refrigerant compressed by the compressor 12 toward either the heat-source-side heat exchanger 13 or the user-side heat exchanger 15. The four-way switching valve 18 can switch the operation between the normal-cycle operation, in which the heat-source-side heat exchanger 13 functions as a radiator, while the user-side heat exchanger 15 functions as an evaporator (the direction of the solid-line arrow); and the reverse-cycle operation, in which the heat-source-side heat exchanger 13 functions as an evaporator, while the user-side heat exchanger 15 functions as a radiator (the direction of the dashed-line arrow).

In the refrigerating machine 10 configured as described above, when the evaporating temperature of the refrigerant in the user-side heat exchanger 15 (evaporator) reaches 0°C or below, the user-side heat exchanger 15 (evaporator) may undergo frost formation. Frost formation decreases the heat-exchange efficiency of the user-side heat exchanger 15 (evaporator), increasing the power consumption and/or decreasing the cooling capacity. Thus, it is preferable to remove frost adhered to the user-side heat exchanger 15 (evaporator) by performing a defrosting operation (defrost) under predetermined conditions.

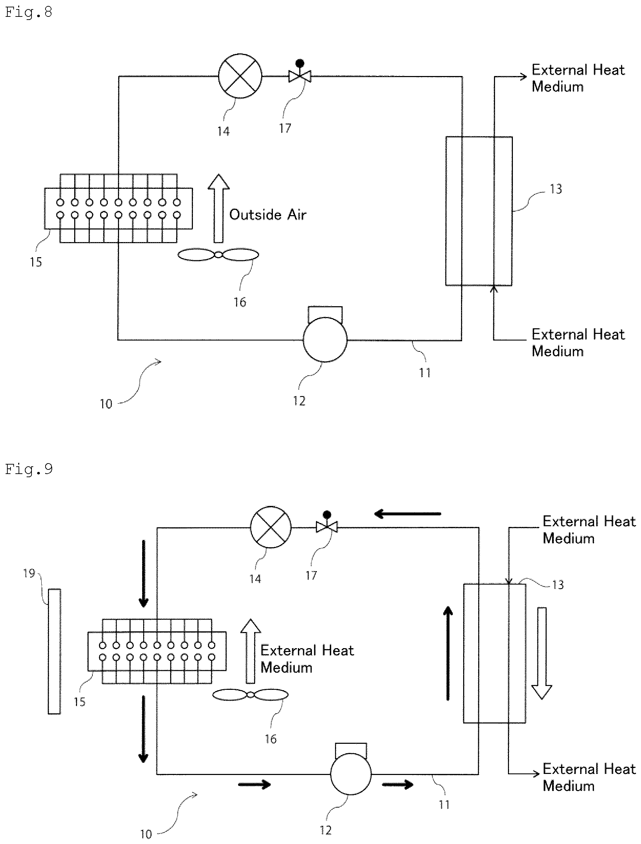

The defrosting operation (defrost) may be off-cycle defrost performed by, as illustrated in Fig. 8, stopping the operation of the compressor 12, and then activating a fan 16 without flowing the refrigerant to the user-side heat exchanger 15. The off-cycle defrost sends an external heat medium to the user-side heat exchanger 15 by the fan 16 to defrost the user-side heat exchanger 15. The user-side heat exchanger 15 configured with a heat exchanger that uses water as an external heat medium is provided with the fan 16.

The defrosting operation (defrost) may be heating defrost performed by, as illustrated in Fig. 9, further adding a heating means 19 for heating the user-side heat exchanger 15 to the refrigerating machine 10, and activating the heating means 19. The heating defrost heats the user-side heat exchanger 15 by the heating means 19 to melt the frost adhered to the user-side heat exchanger 15, thereby defrosting the user-side heat exchanger 15. Examples of the heating means 19 for use include electric heaters.

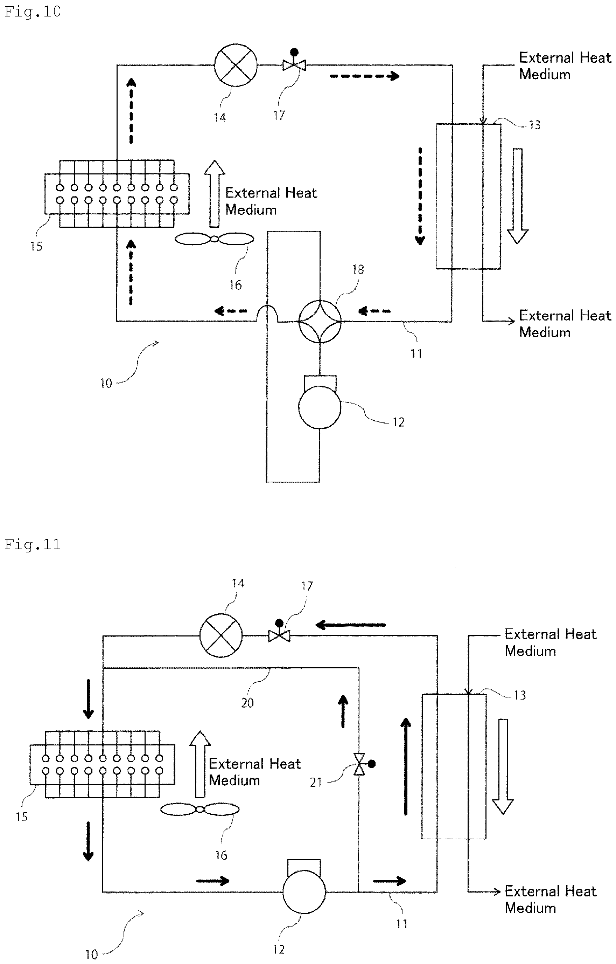

The defrosting operation (defrost) may be reverse-cycle hot-gas defrost performed by, as illustrated in Fig. 10, activating the reverse-cycle operation described above. Activating the reverse-cycle operation supplies the high-temperature high-pressure gas refrigerant compressed by the compressor 12 to the user-side heat exchanger 15 to melt the frost adhered to the user-side heat exchanger 15, thereby defrosting the user-side heat exchanger 15.

The defrosting operation (defrost) may be normal-cycle hot-gas defrost as illustrated in Fig. 11. In Fig. 11, the refrigerant circuit 11 is provided with a bypass flow path 20 that is connected to the discharge side of the compressor 12 at one end, and to the inlet side of the user-side heat exchanger 15 at the other end. The normal-cycle hot-gas defrost opens a bypass valve 21, while circulating the refrigerant, to directly supply the high-temperature high-pressure gas refrigerant compressed by the compressor 12 to the user-side heat exchanger 15 through the bypass flow path 20. This melts the frost adhered to the user-side heat exchanger 15, thereby defrosting the user-side heat exchanger 15. The high-temperature high-pressure gas refrigerant compressed by the compressor 12 may be bypassed after being depressurized through an expansion mechanism 14 at the inlet side of the user-side heat exchanger 15.

The predetermined conditions under which the defrosting operation (defrost) is performed may be configured such that, for example, a temperature sensor (not shown) detects the inflow refrigerant temperature at the user-side heat exchanger 15 and outside air temperature, and, for example, a control unit determines whether frost is formed in the user-side heat exchanger 15 based on these temperatures; and performs the defrosting operation (defrost) triggered by the determination that frost has been formed.

## 4. Method for Operating Refrigerating Machine

The method for operating the refrigerating machine according to the present disclosure is a method for operating the refrigerating machine (A) or (B) using the refrigerant according to the present disclosure.

Specifically, the method for operating the refrigerating machine according to the present disclosure comprises circulating the refrigerant according to the present disclosure in the refrigerating machine (A) or (B).

When the refrigerating machine has the following structure, the method for operating the refrigerating machine according to the present disclosure may comprise switching the operation between the normal-cycle operation and the reverse-cycle operation by the four-way switching valve described below:

> A refrigerating machine comprising a refrigerant circuit that includes a compressor, a heat-source-side heat exchanger, an expansion mechanism, and a user-side heat exchanger in this order,
> the refrigerant circuit including a four-way switching valve that switches the flow of a refrigerant compressed by the compressor toward either the heat-source-side heat exchanger or the user-side heat exchanger,
> the four-way switching valve capable of switching an operation between a normal-cycle operation in which the heat-source-side heat exchanger functions as a radiator while the user-side heat exchanger functions as an evaporator, and a reverse-cycle operation in which the heat-source-side heat exchanger functions as an evaporator while the user-side heat exchanger functions as a radiator.

Additionally, the method for operating the refrigerating machine according to the present disclosure may further comprise performing reverse-cycle hot-gas defrost by the reverse-cycle operation.

When the refrigerating machine has the following structure, the method for operating the refrigerating machine according to the present disclosure may comprise performing off-cycle defrost by stopping the operation of the compressor described below, and operating the user-side fan described below:

A refrigerating machine comprising a refrigerant circuit that includes a compressor, a heat-source-side heat exchanger, an expansion mechanism, and a user-side heat exchanger in this order, the user-side heat exchanger being provided with a user-side fan.

When the refrigerating machine has the following structure, the method for operating the refrigerating machine according to the present disclosure may comprise performing heating defrost by heating the user-side heat exchanger with the heating means described below:

A refrigerating machine comprising a refrigerant circuit that includes a compressor, a heat-source-side heat exchanger, an expansion mechanism, and a user-side heat exchanger in this order; and further comprising a heating means for heating the user-side heat exchanger.

When the refrigerating machine has the following structure, the method for operating the refrigerating machine according to the present disclosure may comprise performing normal-cycle hot-gas defrost by supplying a refrigerant compressed by the compressor to the user-side heat exchanger through the bypass flow path:

A refrigerating machine comprising a refrigerant circuit that includes a bypass flow path that is connected to the discharge side of the compressor at one end, and to the inlet side of the user-side heat exchanger at the other end.

Examples

Below, the present disclosure is described in more detail with reference to Examples. However, the present disclosure is not limited to the Examples.

The following describes a method for identifying an ASHRAE non-flammability limit region in a ternary composition diagram in which when the concentration of $CO_2$ is 6.0 mass% based on the sum of the concentration of $CO_2$, R32, R125, and R134a taken as 100 mass%, the sum of the concentration of R32, R125, and R134a is 94.0 mass%.

To identify the ASHRAE non-flammability limit in a ternary composition diagram, first, the non-flammability limit of a binary mixed refrigerant of a flammable refrigerant (R32) and a non-flammable refrigerant ($CO_2$, R134a, and R125) must be determined. In Experiment Example 1, the non-flammability limit of the binary mixed refrigerant was determined.

Experiment Example 1 (Non-Flammability Limit of a Binary Mixed Refrigerant Composed of a Flammable Refrigerant (R32) and a Non-Flammable Refrigerant ($CO_2$, R134a, R125))

The non-flammability limit of a binary mixed refrigerant was determined with the measurement device and measurement method of the combustion test according to ASTM E681-2009.

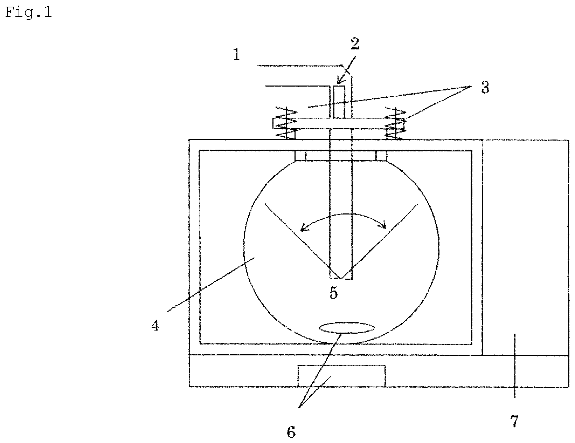

Specifically, in order to conduct visual observation and video recording of the state of combustion, the spherical glass flask (inner volume: 12 liters) illustrated in Fig. 1 was used. The upper lid of the glass flask was set to release gas when excessive pressure is applied on the glass flask by combustion. The ignition was initiated by discharge from electrodes held at a height one-third from the bottom. The test conditions are as described below.

Test Conditions

Test Vessel: 280 mm in diameter, spherical (inner volume: 12 liters)
Test Temperature: 60°C ± 3°C
Pressure: 101.3 kPa ± 0.7 kPa
Water Content: 0.0088 g ± 0.0005 g per g of dry air
Mixture Ratio of Binary Refrigerant Composition/Air: per vol% ± 0.2 vol%
Mixing of Binary Refrigerant Composition: ± 0.1 mass%
Ignition Method: AC discharge, voltage 15 kV, current 30 mA, neon transformer
Electrode Interval: 6.4 mm (1/4 inch)

Spark: 0.4 seconds $\pm$ 0.05 seconds

Determination Criteria:

- In the case in which a flame propagates at a frame angle of 90° or more from around the ignition point = combustion (propagation)
- In the case in which a flame propagates at a frame angle of less than 90° from around the ignition point = no flame propagation (non-flammable)

As a result, the mixed refrigerant of a flammable refrigerant R32 and a non-flammable refrigerant R134a exhibited no flame propagation from the point at which R32=43.0 mass%, and R134a=57.0 mass%. This formulation was determined to be a non-flammability limit. Additionally, flame propagation was not observed in a flammable refrigerant R32 and a non-flammable refrigerant R125 from the point at which R32=63.0 mass%, and R125=37.0 mass%; and in a flammable refrigerant R32 and a non-flammable refrigerant $CO_2$ from the point at which R32=40.0 mass%, and $CO_2$=60.0 mass%. These formulations were determined to be non-flammability limits. Table 1 illustrates a summary of the results.

Table 1

| Item | Flammable Refrigerant | Non-Flammable Refrigerant |
|---|---|---|
| Combination of Binary Mixed Refrigerant | R32 | R134a |
| Non-Flammability Limit (mass%) | 43.0 | 57.0 |
| Combination of Binary Mixed Refrigerant | R32 | R125 |
| Non-Flammability Limit (mass%) | 63.0 | 37.0 |
| Combination of Binary Mixed Refrigerant | R32 | $CO_2$ |
| Non-Flammability Limit (mass%) | 40.0 | 60.0 |

Experiment Example 2 (ASHRAE Non-Flammability Limit When $CO_2$=6.0 Mass%)

Subsequently, the ASHRAE non-flammability limit when $CO_2$=6.0 mass% was determined based on the non-flammability limit of the binary mixed refrigerant determined in Experiment Example 1 by calculation as described below.

1) When $CO_2$=6.0 mass%, and R134a=0 mass%

A WCFF formulation for a mixed formulation close to the ASHRAE non-flammability limit was determined by simulating leakage during storage, transport, and use based on the ANSI/ASHRAE34-2013 using the NIST (The National Institute of Standard and Technology) leak and recharge simulation program for refrigerant version 4.0 (REFLEAK 4.0), and calculating it from a leakage simulation at +10°C or -40°C from a boiling point during storage, in which combustion is most likely to occur.
Table 2 illustrates the results. Whether the calculated WCFF formulation is a non-flammability-limit formulation was investigated in accordance with the following procedure.
A converted non-flammable refrigerant concentration of R32 was determined using the following formula.

```
The converted non-flammable refrigerant concentration of R32 =
the concentration of R125 × (63/37) + the concentration of R134a
× (43/57)+ the concentration of CO₂ × (40/60)
```

The release rate at which the value of (the converted non-flammable refrigerant formulation of R32 - the refrigerant formulation of R32) is the minimum value indicates the WCFF formulation at its initial value. The initial value at which the value of (the converted non-flammable refrigerant formulation of R32 - the refrigerant formulation of R32) was the positive minimum value was determined to be the calculated ASHRAE non-flammability-limit formulation when R134a

Table 2

= 0 mass%.

| Item | R32 mass% | R125 mass% | R134a mass% | CO$_2$ mass% |
|---|---|---|---|---|
| Initial Value | 59.2 | 34.8 | 0.0 | 6.0 |

| Release Rate % | R32 mass% | R125 mass% | R134a mass% | CO$_2$ mass%% | Converted Non-Flammable Refrigerant Concentration of R32 mass% | Non-Flammability - Flammability (Non-Flammability (Positive)) | Note |
|---|---|---|---|---|---|---|---|
| 0.0 | 49.68 | 25.92 | 0.00 | 24.40 | 60.40 | 10.71 | |
| 10.0 | 53.34 | 28.45 | 0.00 | 18.21 | 60.58 | 7.24 | |
| 20.0 | 56.64 | 30.83 | 0.00 | 12.53 | 60.86 | 4.22 | |
| 30.0 | 59.29 | 32.90 | 0.00 | 7.81 | 61.22 | 1.93 | |
| 40.0 | 61.15 | 34.53 | 0.00 | 4.32 | 61.68 | 0.53 | |
| 50.0 | 62.20 | 35.75 | 0.00 | 2.05 | 62.23 | 0.03 | WCFF |
| 60.0 | 62.56 | 36.64 | 0.00 | 0.80 | 62.92 | 0.35 | |
| 70.0 | 62.39 | 37.39 | 0.00 | 0.23 | 63.81 | 1.43 | |
| 80.0 | 61.73 | 38.23 | 0.00 | 0.04 | 65.12 | 3.39 | |

| Item | R32 mass% | R125 mass% | R134a mass% | CO2 mass% | Converted Non-Flammable Refrigerant Concentration of R32 mass% | Non-Flammability − Flammability (Non-Flammability (Positive)) | Note |
|---|---|---|---|---|---|---|---|
| Initial Value | 59.3 | 34.7 | 0.0 | 6.0 | | | |
| Release Rate % | R32 mass% | R125 mass% | R134a mass% | CO2 mass% | | | |
| 0.0 | 49.63 | 25.76 | 0.00 | 24.60 | 60.27 | 10.64 | |
| 10.0 | 53.32 | 28.30 | 0.00 | 18.38 | 60.44 | 7.12 | |
| 20.0 | 56.64 | 30.69 | 0.00 | 12.67 | 60.70 | 4.06 | |
| 30.0 | 59.33 | 32.77 | 0.00 | 7.90 | 61.06 | 1.73 | |
| 40.0 | 61.22 | 34.41 | 0.00 | 4.37 | 61.51 | 0.29 | |
| 50.0 | 62.29 | 35.63 | 0.00 | 2.08 | 62.05 | −0.24 | MCEF |
| 60.0 | 62.67 | 36.53 | 0.00 | 0.81 | 62.73 | 0.06 | |
| 70.0 | 62.50 | 37.27 | 0.00 | 0.23 | 63.62 | 1.12 | |
| 80.0 | 61.85 | 38.11 | 0.00 | 0.04 | 64.92 | 3.07 | |

2) When $CO_2$=6.0 mass%, and R134a=25.0 mass%

An ASHRAE non-flammability-limit formulation was determined with R32+R125=69.0 mass%, in the same procedure as described above. Table 3 illustrates the results.

Table 3

| Item | R32 | R125 | R134a | CO₂ | | | |
|---|---|---|---|---|---|---|---|
| | mass% | mass% | mass% | mass% | | | |
| Initial Value | 46.8 | 22.2 | 25.0 | 6.0 | | | |
| Release Rate % | R32 | R125 | R134a | CO₂ | Converted Non-Flammable Refrigerant Concentration of R32 | Non-Flammability - Flammability (Non-Flammability (Positive)) | Note |
| | mass% | mass% | mass% | mass% | mass% | | |
| 0.0 | 44.90 | 18.92 | 7.48 | 28.71 | 56.99 | 12.10 | |
| 10.0 | 49.44 | 21.38 | 8.86 | 20.33 | 56.63 | 7.20 | |
| 20.0 | 53.34 | 23.60 | 10.45 | 12.60 | 56.48 | 3.13 | |
| 30.0 | 55.93 | 25.25 | 12.23 | 6.59 | 56.61 | 0.68 | |
| 36.0 | 56.69 | 25.87 | 13.39 | 4.05 | 56.85 | 0.17 | WCFF |
| 40.0 | 56.85 | 26.13 | 14.23 | 2.80 | 57.09 | 0.24 | |
| 50.0 | 56.15 | 26.29 | 16.66 | 0.90 | 57.93 | 1.78 | |
| 60.0 | 53.99 | 25.86 | 19.96 | 0.20 | 59.21 | 5.23 | |

| Item | R32 mass% | R125 mass% | R134a mass% | CO₂ mass% | | R32 mass% | R125 mass% | R134a mass% | CO₂ mass% | Converted Non-Flammable Refrigerant Concentration of R32 mass% | Non-Flammability − Flammability (Non-Flammability (Positive)) | Note |
|---|---|---|---|---|---|---|---|---|---|---|---|---|
| Initial Value | 46.9 | 22.1 | 25.0 | 6.0 | | | | | | | | |
| Release Rate % | R32 | R125 | R134a | CO₂ | | | | | | | | |
| 0.0 | 44.98 | 18.83 | 7.48 | 28.71 | | | | | | 56.85 | 11.87 | |
| 10.0 | 49.53 | 21.28 | 8.85 | 20.33 | | | | | | 56.47 | 6.94 | |
| 20.0 | 53.45 | 23.50 | 10.45 | 12.60 | | | | | | 56.30 | 2.85 | |
| 30.0 | 56.04 | 25.14 | 12.22 | 6.59 | | | | | | 56.42 | 0.38 | |
| 36.0 | 56.80 | 25.76 | 13.39 | 4.05 | | | | | | 56.66 | -0.14 | WCFF |
| 40.0 | 56.96 | 26.01 | 14.23 | 2.79 | | | | | | 56.89 | -0.08 | |
| 50.0 | 56.27 | 26.17 | 16.66 | 0.90 | | | | | | 57.73 | 1.46 | |
| 60.0 | 54.10 | 25.74 | 19.96 | 0.20 | | | | | | 59.01 | 4.91 | |

3) When $CO_2$=6.0 mass%, and R134a=50.0 mass%

An ASHRAE non-flammability-limit formulation was determined with R32+R125=44 mass%, in the same procedure as described above. Table 4 illustrates the results.

Table 4

| Item | R32 mass% | R125 mass% | R134a mass% | CO₂ mass% | Converted Non-Flammable Refrigerant Concentration of R32 mass% | Non-Flammability – Flammability (Non-Flammability (Positive)) | Note |
|---|---|---|---|---|---|---|---|
| Initial Value | 34.2 | 9.8 | 50.0 | 6.0 | | | |
| Release Rate % | R32 mass% | R125 mass% | R134a mass% | CO₂ mass% | R32 mass% | | |
| 0 | 38.37 | 9.71 | 17.29 | 34.63 | 52.66 | 14.29 | |
| 10 | 44.09 | 11.50 | 21.64 | 22.76 | 51.09 | 7.00 | |
| 20 | 48.58 | 13.00 | 26.68 | 11.73 | 50.09 | 1.52 | |
| 30 | 50.06 | 13.63 | 30.83 | 5.48 | 50.12 | 0.05 | WCFF |
| 36 | 50.09 | 13.69 | 31.85 | 4.37 | 50.26 | 0.17 | |
| 40 | 48.32 | 13.49 | 37.09 | 1.10 | 51.68 | 3.35 | |
| 50 | 44.05 | 12.63 | 43.16 | 0.16 | 54.17 | 10.13 | |

| Item | R32 mass% | R125 mass% | R134a mass% | CO₂ mass% | Converted Non-Flammable Refrigerant Concentration of R32 mass% | Non-Flammability – Flammability (Non-Flammability (Positive)) | Note |
|---|---|---|---|---|---|---|---|
| Initial Value | 34.3 | 9.7 | 50.0 | 6.0 | | | |
| Release Rate % | R32 mass% | R125 mass% | R134a mass% | CO₂ mass% | R32 mass% | | |
| 0 | 38.47 | 9.61 | 17.28 | 34.63 | 52.50 | 14.03 | |
| 10 | 44.21 | 11.39 | 21.64 | 22.77 | 50.89 | 6.68 | |
| 20 | 48.71 | 12.87 | 26.68 | 11.73 | 49.87 | 1.16 | |
| 30 | 50.20 | 13.49 | 30.83 | 5.48 | 49.88 | -0.32 | WCFF |
| 36 | 50.23 | 13.55 | 31.85 | 4.36 | 50.02 | -0.21 | |
| 40 | 48.46 | 13.35 | 37.09 | 1.09 | 51.44 | 2.98 | |
| 50 | 44.18 | 12.50 | 43.15 | 0.16 | 53.95 | 9.77 | |

When 4) $CO_2$=6.0 mass%, and R125=0 mass%

An ASHRAE non-flammability-limit formulation was determined under these conditions in the same procedure as described above. Table 5 illustrates the results.

Table 5

| Item | | R32 mass% | R125 mass% | R134a mass% | CO₂ mass% | Converted Non-Flammable Refrigerant Concentration of R32 mass% | Converted Non-Flammability – R32 (Non-Flammability (Positive)) | Note |
|---|---|---|---|---|---|---|---|---|
| Initial Value | | 24.5 | 0.0 | 69.5 | 6.0 | | | |
| Release Rate % | 0.0 | 31.89 | 0.00 | 28.15 | 39.96 | 47.88 | 15.99 | |
| | 10.0 | 38.25 | 0.00 | 37.31 | 24.44 | 44.44 | 6.19 | |
| | 20.0 | 42.38 | 0.00 | 47.63 | 9.99 | 42.59 | 0.21 | |
| | 22.0 | 42.60 | 0.00 | 49.55 | 7.85 | 42.61 | 0.01 | WCFF |
| | 30.0 | 41.31 | 0.00 | 56.31 | 2.38 | 44.07 | 2.76 | |
| | 40.0 | 36.21 | 0.00 | 63.48 | 0.31 | 48.09 | 11.89 | |
| | 50.0 | 29.11 | 0.00 | 70.87 | 0.02 | 53.48 | 24.37 | |

| Item | | R32 mass% | R125 mass% | R134a mass% | CO₂ mass% | Converted Non-Flammable Refrigerant Concentration of R32 mass% | Non-Flammability – Flammability (Non-Flammability (Positive)) | Note |
|---|---|---|---|---|---|---|---|---|
| Initial Value | | 24.6 | 0.0 | 69.4 | 6.0 | | | |
| Release Rate % | 0.0 | 31.99 | 0.00 | 28.09 | 39.92 | 47.81 | 15.82 | |
| | 10.0 | 38.35 | 0.00 | 37.22 | 24.43 | 44.36 | 6.01 | |
| | 20.0 | 42.50 | 0.00 | 47.49 | 10.01 | 42.50 | 0.01 | |
| | 22.0 | 42.72 | 0.00 | 49.41 | 7.87 | 42.52 | -0.20 | WCFF |
| | 30.0 | 41.45 | 0.00 | 56.16 | 2.40 | 43.96 | 2.52 | |
| | 40.0 | 36.36 | 0.00 | 63.32 | 0.32 | 47.98 | 11.62 | |
| | 50.0 | 29.26 | 0.00 | 70.72 | 0.02 | 53.36 | 24.10 | |

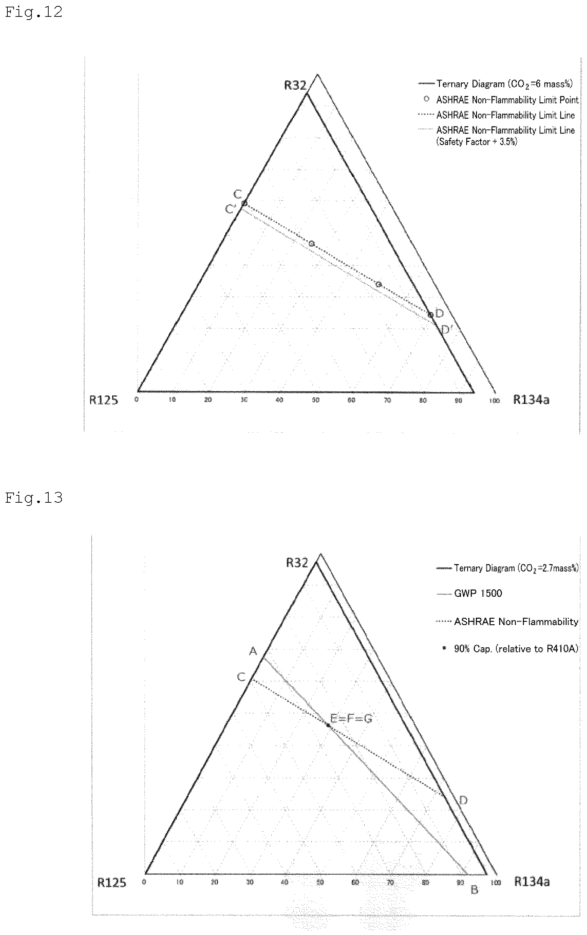

The four points determined by examining the calculated ASHRAE non-flammability-limit formulations above are shown in the ternary composition diagram of Fig. 12. Because the non-flammability border point at which R134a=25 mass% and the non-flammability border point at which R134a=50 mass% are on the line that connects point C at which R134a=0 mass% and point D at which R125=0 mass%, line segment CD is considered to be a calculated ASHRAE non-flammability border line below.

Experiment Example 3 (Verification of Calculated Non-Flammability Limit Obtained in Experiment Example 2 by Combustion Test)

A combustion test was performed in accordance with the ASTM E681 described in Experiment Example 1 with the WCFF formulation (R32/R125/R134a/CO₂)=(62.2/35.8/0/0/2.0) for the formulation (R32/R125/R134a/CO₂)=(59.2/34.8/0/6.0), and the WCFF formulation (R32/R125/R134a/CO₂)=(50.1/13.6/30.8/5.5) for the formulation (R32/R125/R134a/CO₂)=(34.2/9.8/50.0/6.0) as typical examples. In these WCFF formulations, flame propagation was not observed.

Thus, the ASHRAE non-flammability limit calculated in Experiment Example 2 on the basis of the non-flammability limit of a binary composition determined in Experiment Example 1 satisfies the ASHRAE non-flammability requirement based on the ANSI/ASHRAE Standard 34-2013.

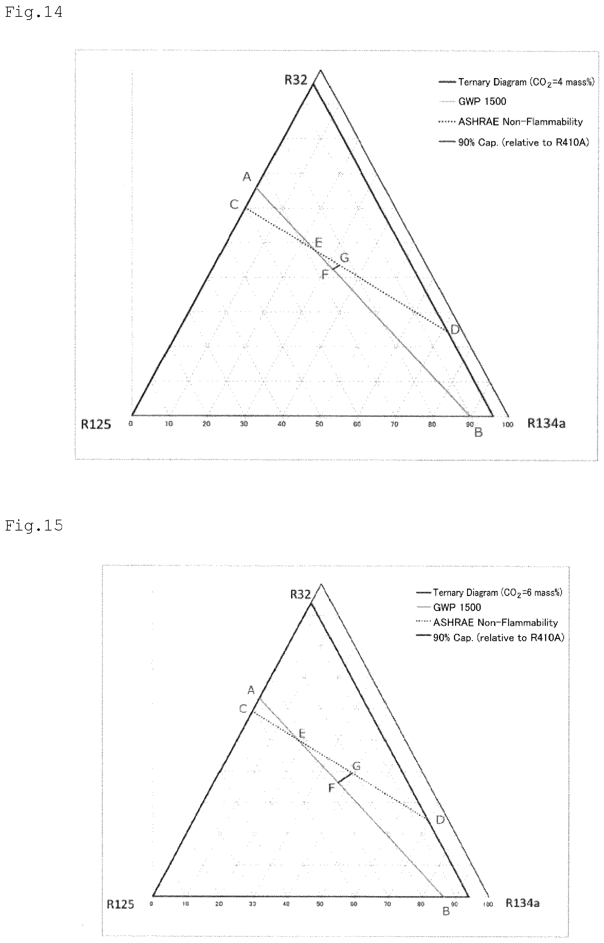

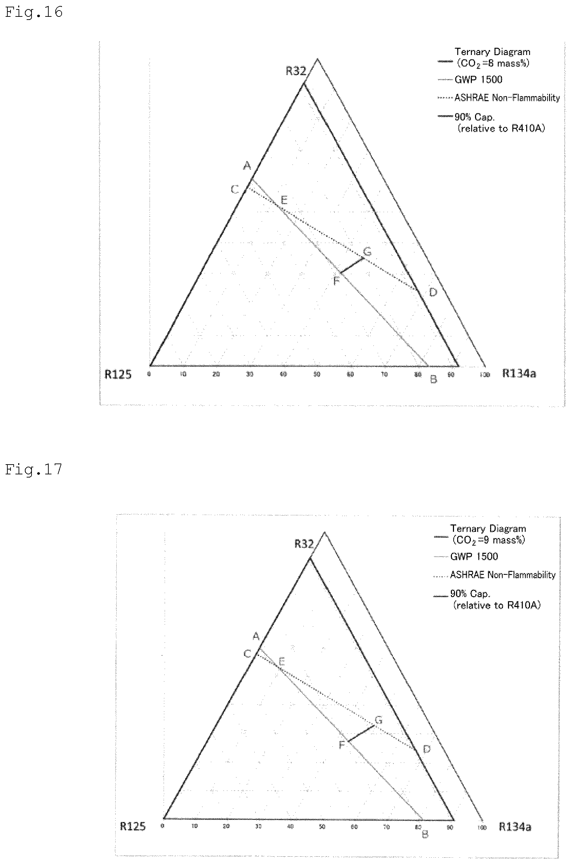

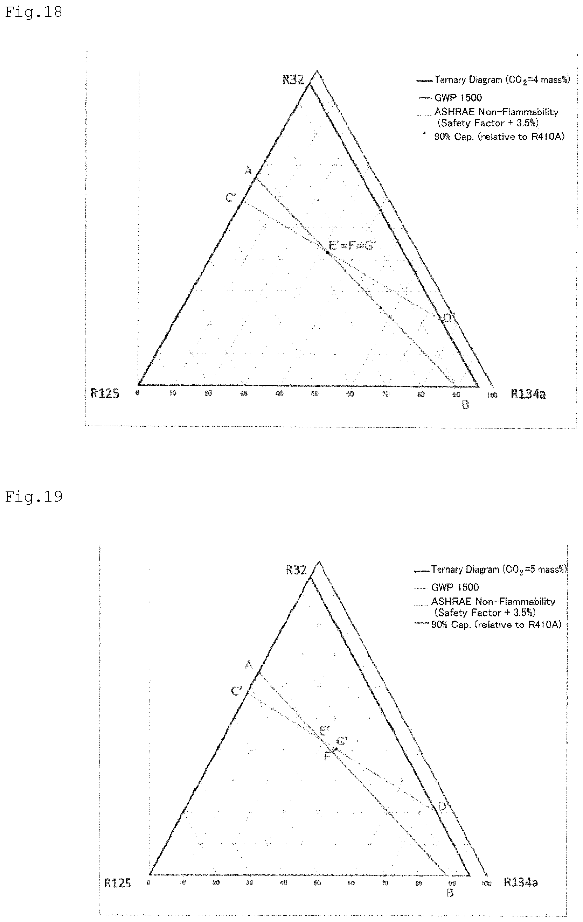

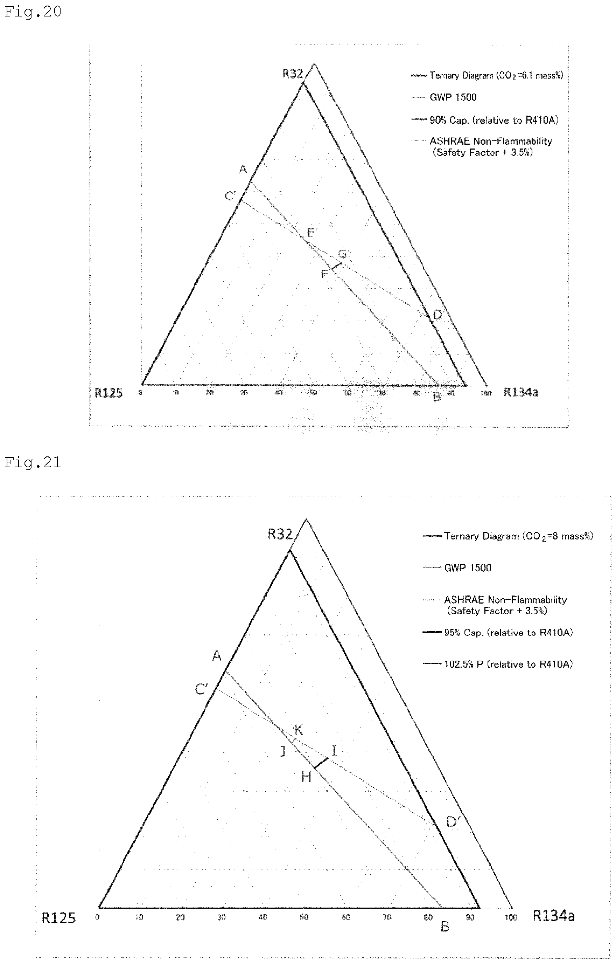

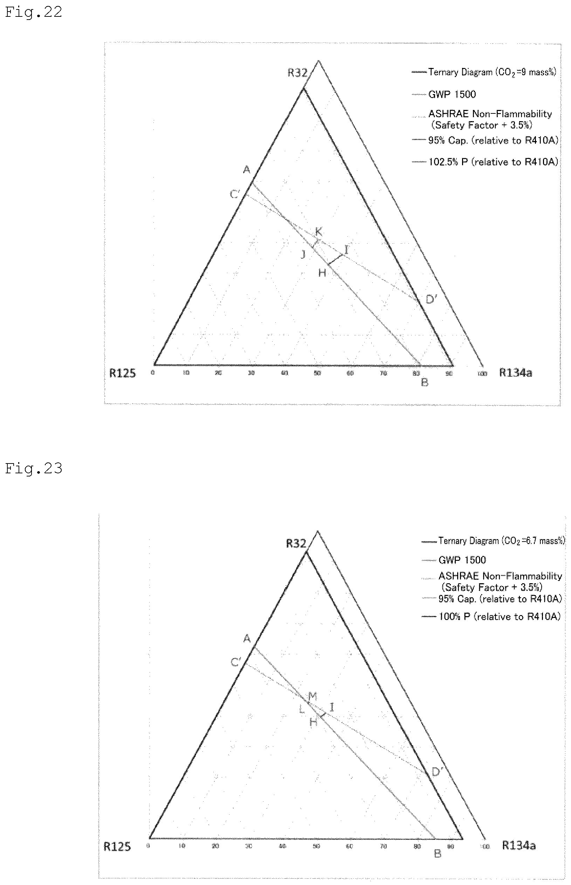

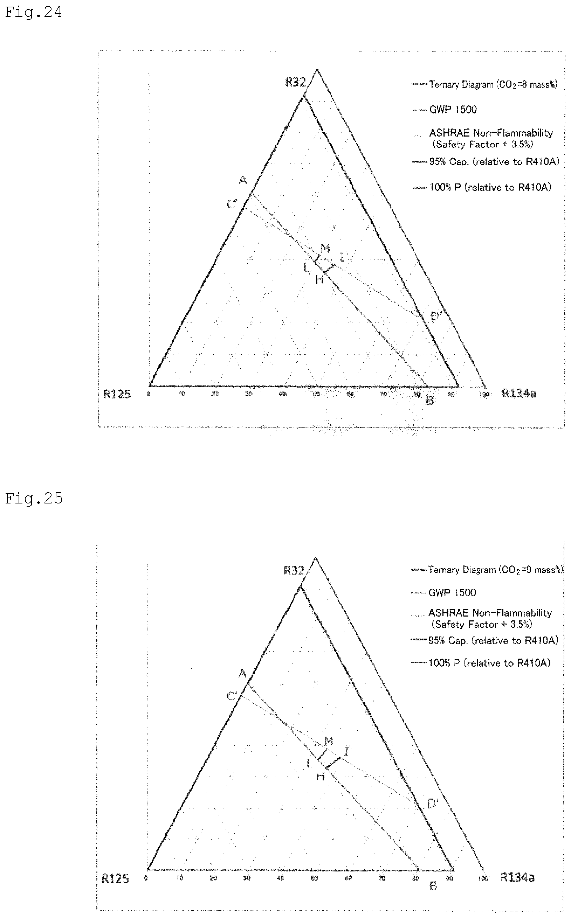

The ASHRAE non-flammability limits shown in Figs. 13 to 25 were also determined in the same manner as for the ASHRAE non-flammability limit when $CO_2$=6.0 mass%.

It is preferable to further consider safety factors in the ASHRAE non-flammability limits determined by calculation as described above, taking into consideration the purity of individual refrigerants during the production process and/or a margin of error during the mixing process. The ASHRAE non-flammability limit line CD was shifted in parallel so that the non-flammable refrigerant R125 was increased by 3.5 mass%. The resulting line segment C'D' was determined to be the ASHRAE non-flammability limit line that takes safety factors into account.

When R32=x mass% and R125=y mass%, for example, line segment CD that connects point C (R32/R125/R134a/$CO_2$)=(59.2/34.8/0/6.0) and point D (R32/R125/R134a/$CO_2$)=(24.6/0/69.4/6.0) is indicated by y=1.0029x-24.571. Thus, this ASHRAE non-flammability line C'D' that takes safety factors into account is indicated by y=1.0029x-21.071.

Regarding the compositional ratio of $CO_2$, R32, R125, and R134a contained in the mixture, when the concentration of $CO_2$ is x mass%, the sum of the concentration of R32, R125, and R134a is (100-x) mass%. The compositional ratio of $CO_2$, R32, R125, and R134a contained in the mixture can be indicated as a coordinate point in a ternary composition diagram in which the sum of the concentration of R32, R125, and R134a is (100-x). The following explains how to determine a specific coordinate point. The ASHRAE non-flammability limits that take safety factors into account (+3.5%) shown in Figs. 13 to 25 were also determined together.

The description below is based on different ranges of x. The meaning of points A, B, C, D, E, F, G, C', D', E', G', H, I, J, K, L, and M is as described below. The concentration of each point was determined in the Examples below, and the value is shown.

A: A compositional ratio when GWP is 1500, and the concentration of R134a (mass%) is 0 mass%.

B: A compositional ratio when GWP is 1500, and the concentration of R32 (mass%) is 0 mass%

C: A compositional ratio on the ASHRAE non-flammability border line, and when the concentration of R134a (mass%) is 0 mass%.

D: A compositional ratio on the ASHRAE non-flammability border line, and when the concentration of R125 (mass%) is 0 mass%. E: A point of intersection between line segment AB and line segment CD

F: A compositional ratio when GWP is 1500, and the refrigerating capacity relative to that of R410A is 90%.

G: A compositional ratio on the ASHRAE non-flammability border line, and when the refrigerating capacity relative to that of R410A is 90%.

C': A compositional ratio on the ASHRAE non-flammability limit line that takes into account 3.5 mass% of the concentration of the non-flammable refrigerant R125 as a safety factor, and when the concentration of R134a (mass%) is 0 mass%.

D': A compositional ratio on the ASHRAE non-flammability limit line that takes into account 3.5 mass% of the concentration of the non-flammable refrigerant R125 as a safety factor, and when the concentration of R125 (mass%) is 0 mass%.

E': A point of intersection between line segment AB and line segment C'D'.

G': A compositional ratio on the ASHRAE non-flammability limit line that takes into account 3.5 mass% of the concentration of the non-flammable refrigerant R125 as a safety factor, and when the refrigerating capacity relative to that of R410A is 90%.

H: A compositional ratio when GWP is 1500, and the refrigerating capacity relative to that of R410A is 95%.

I: A compositional ratio on the ASHRAE non-flammability border line that takes into account 3.5 mass% of the concentration of the non-flammable refrigerant R125 as safety factor, and when the refrigerating capacity relative to that of R410A is 95%.

J: A compositional ratio when GWP is 1500, and the pressure at the compressor outlet relative to that of R410A is 102.5%.

K: A compositional ratio on the ASHRAE non-flammability limit line that takes into account 3.5 mass% of the concentration of the non-flammable refrigerant R125 as a safety factor, and when the pressure at the compressor outlet relative to that of R410A is 102.5%.

L: A compositional ratio when GWP is 1500, and when the pressure at the compressor outlet relative to that of R410A is 100%.

M: A compositional ratio on the ASHRAE non-flammability limit line that takes into account 3.5 mass% of the concentration of the non-flammable refrigerant R125 as a safety factor, and when the pressure at the compressor outlet relative to that of R410A is 100%.

## (1) How to Determine Points E, F, G, E', G', H, I, J, K, L, and M

### (1-1) Point E

When 6.0 mass%$\geq$x$\geq$2.7 mass%

When the concentration of $CO_2$ is 2.7 mass%, point E on a ternary composition diagram in which the sum of the concentration of R32, R125, and 134a is (100-x) mass% is (the concentration of R32 (mass%)/the concentration of R125 (mass%)/the concentration of 134a (mass%)) =(46.3/22.1/28.9).

When the concentration of R32 is 4.0 mass%, point E on a ternary composition diagram in which the sum of the concentration of R32, R125, and 134a is (100-x) mass% is (the concentration of R32 (mass%)/the concentration of R125 (mass%)/the concentration of 134a (mass%)) =(48.0/23.6/24.4).

When the concentration of R32 is 6.0 mass%, point E on a ternary composition diagram in which the sum of the concentration of R32, R125, and 134a is (100-x) mass% is (the concentration of R32 (mass%)/the concentration of R125 (mass%)/the concentration of 134a (mass%)) =(50.1/25.8/18.1).

Thus, when the sum of the concentration of $CO_2$, R32, R125, and 134a is 100 mass%, and the concentration of R32 is y mass%, the formula of the regression line determined from these three points plotted on xy coordinates is expressed as y= $-0.0781x^2+1.8309x+41.926$.

When the concentration of R125 is z mass%, the formula of the regression line determined from these three points plotted on xy coordinates is expressed as z=1.1194x+19.094.

Additionally, the concentration of R134a at point E is expressed by (100 - the concentration of R32 (mass%) - the concentration of R125 (mass%) - the concentration of $CO_2$ (mass%)).

As described above, point E (the concentration of R32 (mass%)/the concentration of R125 (mass%)/the concentration of 134a (mass%)) on a ternary composition diagram in which the sum of the concentration of R125, R125, and R134a is (100-x) is expressed by ($-0.0781x^2+1.8309x+41.926$/1.1194x+19.094/100 - the concentration of $CO_2$ - the concentration of R32 - the concentration of R125).

The same calculation was also performed for the case in which 9.0 mass%$\geq$x$\geq$6.0 mass%. The table below illustrates (the concentration of R32 (mass%)/the concentration of R125 (mass%)/the concentration of 134a (mass%)) according to each concentration range.

Table 6

| Point E | | | | | | |
|---|---|---|---|---|---|---|
| Item | 6.0$\geq$x$\geq$2.7 | | | 9.0$\geq$x$\geq$6.0 | | |
| $CO_2$ | 2.7 | 4 | 6 | 6 | 8 | 9 |
| R32 | 46.3 | 48 | 50.1 | 50.1 | 52.1 | 53.1 |
| R125 | 22.1 | 23.6 | 25.8 | 25.8 | 27.9 | 28.9 |
| R134a | 28.9 | 24.4 | 18.1 | 18.1 | 12 | 9 |
| $CO_2$ | x | | | x | | |
| Approximation Formula R32 | $-0.0781x2+1.8309x+41.926$ | | | x+44.1 | | |
| Approximation Formula R125 | 1.1194x+19.094 | | | 1.0357x+19.593 | | |
| Approximation Formula R134a | 100-R32-R125-$CO_2$ | | | 100-R32-R125-$CO_2$ | | |

### (1-2) Point F

The approximation formulas were determined in the same manner as above, and Table 7 illustrates the results.

Table 7

| Point F | | | | | | |
|---|---|---|---|---|---|---|
| Item | 6.0$\geq$x$\geq$2.7 | | | 9.0$\geq$x$\geq$6.0 | | |
| $CO_2$ | 2.7 | 4 | 6 | 6 | 8 | 9 |
| R32 | 46.3 | 42.4 | 36.4 | 36.4 | 30.4 | 27.4 |

(continued)

| Point F | | | | | | |
|---|---|---|---|---|---|---|
| Item | $6.0 \geq x \geq 2.7$ | | | $9.0 \geq x \geq 6.0$ | | |
| R125 | 22.1 | 21.6 | 20.8 | 20.8 | 20 | 19.6 |
| R134a | 28.9 | 32 | 36.8 | 36.8 | 41.6 | 44 |
| $CO_2$ | x | | | x | | |
| Approximation Formula R32 | -3x+54.4 | | | -3x+54.4 | | |
| Approximation Formula R125 | -0.3945x+23.17 | | | -0.4x+23.2 | | |
| Approximation Formula R134a | $100-R32-R125-CO_2$ | | | $100-R32-R125-CO_2$ | | |

(1-2) Points G, E', H, J, and L

The approximation formulas were determined in the same manner as above, and Tables 8 to 12 illustrate the results.

Table 8

| Point G | | | | | | |
|---|---|---|---|---|---|---|
| Item | $6.0 \geq x \geq 2.7$ | | | $9.0 \geq x \geq 6.0$ | | |
| $CO_2$ | 2.7 | 4 | 6 | 6 | 8 | 9 |
| R32 | 46.3 | 43.6 | 39.5 | 39.5 | 35.2 | 33 |
| R125 | 22.1 | 19.3 | 15 | 15 | 10.8 | 8.7 |
| R134a | 28.9 | 33.1 | 39.5 | 39.5 | 46 | 49.3 |
| $CO_2$ | x | | | x | | |
| Approximation Formula R32 | -2.0597x+51.853 | | | -2.1643x+52.493 | | |
| Approximation Formula R125 | -2.1514x+27.908 | | | -2.1x+27.6 | | |
| Approximation Formula R134a | $100-R32-R125-CO_2$ | | | $100-R32-R125-CO_2$ | | |

Table 9

| Point E' | | | | Point G' | | | |
|---|---|---|---|---|---|---|---|
| Item | $6.1 \geq x \geq 4.0$ | | | Item | $6.1 \geq x \geq 4.0$ | | |
| $CO_2$ | 4 | 5 | 6.1 | $CO_2$ | 4 | 5 | 6.1 |
| R32 | 42.6 | 43.6 | 44.7 | R32 | 42.6 | 40.4 | 38 |
| R125 | 21.6 | 22.7 | 23.8 | R125 | 21.6 | 19.4 | 17.1 |
| R134a | 31.8 | 28.7 | 25.5 | R134a | 31.8 | 35.2 | 38.8 |
| $CO_2$ | x | | | $CO_2$ | x | | |
| Approximation Formula for R32 | x+38.6 | | | Approximation Formula for R32 | -2.1903x+51.358 | | |
| Approximation Formula for R125 | 1.0468x+17.431 | | | Approximation Formula for R125 | -2.142x+30.148 | | |
| Approximation Formula for R134a | $100-R32-R125-CO_2$ | | | Approximation Formula for R134a | $100-R32-R125-CO_2$ | | |

Table 10

| Point H | | | | Point I | | | |
|---|---|---|---|---|---|---|---|
| Item | 9.0≥x≥6.7 | | | Item | 9.0≥x≥6.7 | | |
| $CO_2$ | 6.7 | 8 | 9 | $CO_2$ | 6.7 | 8 | 9 |
| R32 | 39.8 | 36 | 33 | R32 | 41.1 | 38.4 | 36.4 |
| R125 | 22.5 | 22 | 21.6 | R125 | 20.2 | 17.6 | 15.6 |
| R134a | 31 | 34 | 36.4 | R134a | 32 | 36 | 39 |
| $CO_2$ | x | | | $CO_2$ | x | | |
| Approximation Formula for R32 | -2.9549x+59.61 | | | Approximation Formula for R32 | -2.0451x+54.79 | | |
| Approximation Formula for R125 | -0.391x+25.122 | | | Approximation Formula for R125 | -2x+33.6 | | |
| Approximation Formula for R134a | 100-R32-R125-$CO_2$ | | | Approximation Formula for R134a | 100-R32-R125-$CO_2$ | | |

Table 11

| Point J | | | Point K | | |
|---|---|---|---|---|---|
| Item | 9.0≥x≥8.0 | | Item | 9.0≥x≥8.0 | |
| $CO_2$ | 8 | 9 | $CO_2$ | 8 | 9 |
| R32 | 42.3 | 41.2 | R32 | 8 | 9 |
| R125 | 24.3 | 20.4 | R125 | 43.6 | 42.7 |
| R134a | 25.4 | 29.4 | R134a | 22.8 | 18.5 |
| $CO_2$ | x | | $CO_2$ | 25.6 | 29.8 |
| Approximation Formula for R32 | -1.1x+51.1 | | Approximation Formula for R32 | -0.9x+50.8 | |
| Approximation Formula for R125 | -3.9x+55.5 | | Approximation Formula for R125 | -4.3x+57.2 | |
| Approximation Formula for R134a | 100-R32-R125-$CO_2$ | | Approximation Formula for R134a | 100-R32-R125-$CO_2$ | |

Table 12

| Point L | | | | Point M | | | |
|---|---|---|---|---|---|---|---|
| Item | 9.0≥x≥6.7 | | | Item | 9.0≥x≥6.7 | | |
| $CO_2$ | 6.7 | 8 | 9 | $CO_2$ | 6.7 | 8 | 9 |
| R32 | 44.1 | 39.3 | 39 | R32 | 44.5 | 41.3 | 40.5 |
| R125 | 24.1 | 23.2 | 18.2 | R125 | 23.6 | 20.5 | 16.2 |
| R134a | 25.1 | 29.5 | 33.8 | R134a | 25.2 | 30.2 | 34.3 |
| $CO_2$ | x | | | $CO_2$ | x | | |
| Approximation Formula for R32 | 1.4749x2-25.374x+147.89 | | | Approximation Formula for R32 | 0.7224x2-13.081x+99.713 | | |
| Approximation Formula for R125 | -1.8729x2+26.839x-71.649 | | | Approximation Formula for R125 | -0.8328x2+9.8572x-5.0599 | | |

(continued)

| Point L | Point M | | |
|---|---|---|---|
| Item | $9.0 \geq x \geq 6.7$ | Item | $9.0 \geq x \geq 6.7$ |
| Approximation Formula for R134a | $100 - R32 - R125 - CO_2$ | Approximation Formula for R134a | $100 - R32 - R125 - CO_2$ |

Examples 1 to 34 and Comparative Examples 1 to 36

The GWP of the compositions that contain a mixture of R410A, $CO_2$, R32, R125, and R134a was evaluated based on the values in the fourth report of the Intergovernmental Panel on Climate Change (IPCC). The refrigerating capacity of the compositions that contain a mixture of R410A, $CO_2$, R32, R125, and R134a were determined by performing theoretical calculation of the refrigeration cycle for each mixed refrigerant by using the Reference Fluid Thermodynamic and Transport Properties Database (REFPROP 9.0) of the National Institute of Science and Technology (NIST), under the following conditions.

Evaporating Temperature -10°C
Condensation Temperature 40°C
Superheating Temperature 5K
Subcooling Temperature 5K
Compressor Efficiency 70%

The flammability was determined based on the classification of the ASHRAE flammability.
Tables 13 to 22 illustrate the GWP, COP, and refrigerating capacity calculated based on these results. The COP and the refrigerating capacity are indicated by their percentage relative to R410A.
The coefficient of performance (COP) was calculated using the following formula.

```
COP = (refrigerating capacity or heating capacity)/power

consumption.
```

Table 13 illustrates the case in which $CO_2$ is contained in an amount of 2.7 mass%.

Table 13

| Item | Unit | Comparative Example 1 | Comparative Example 2 | Comparative Example 3 | Comparative Example 4 | Comparative Example 5 | Example 1 |
|---|---|---|---|---|---|---|---|
| | | R410A | A | B | C | D | E=F=G |
| R32 | mass% | 50.0 | 67.5 | 0.0 | 60.8 | 24.1 | 46.3 |
| R125 | mass% | 50.0 | 29.8 | 5.2 | 36.5 | 0.0 | 22.1 |
| R134a | mass% | 0.0 | 0.0 | 92.2 | 0.0 | 73.2 | 28.9 |
| $CO_2$ | mass% | 0.0 | 2.7 | 2.7 | 2.7 | 2.7 | 2.7 |
| GWP | - | 2088 | 1500 | 1500 | 1688 | 1209 | 1500 |
| COP in Comparison | % (relative to R410A) | 100.0 | 100.2 | 103.8 | 99.9 | 104.2 | 101.4 |
| Refrigerating Capacity in Comparison | % (relative to R410A) | 100.0 | 109.9 | 48.1 | 108.4 | 65.8 | 90.2 |
| Pressure at Compressor Outlet in Comparison | % (relative to R410A) | 100.0 | 107.1 | 51.5 | 106.8 | 66.7 | 89.9 |
| ASHRAE Flammability/Non-flammability | - | Non-flammable | Flammable | Non-flammable | Non-flammable | Non-flammable | Non-flammable |

Table 14 illustrates the case in which $CO_2$ is contained in an amount of 4.0 mass%.

Table 14

| Item | Unit | Comparative Example 5 | Comparative Example 6 | Comparative Example 7 | Comparative Example 8 | Example 2 | Example 3 | Example 4 |
|---|---|---|---|---|---|---|---|---|
| | | A | B | C | D | E | F | G |
| R32 | mass% | 65.9 | 0.0 | 60.2 | 24.5 | 48.0 | 42.4 | 43.6 |
| R125 | mass% | 30.1 | 6.1 | 35.8 | 0.0 | 23.6 | 21.6 | 19.3 |
| R134a | mass% | 0.0 | 89.9 | 0.0 | 71.5 | 24.4 | 32.0 | 33.1 |
| $CO_2$ | mass% | 4.0 | 4.0 | 4.0 | 4.0 | 4.0 | 4.0 | 4.0 |
| GWP | - | 1500 | 1500 | 1659 | 1188 | 1500 | 1500 | 1443 |
| COP in Comparison | % (relative to R410A) | 99.8 | 103.1 | 99.4 | 103.6 | 100.6 | 101.0 | 101.2 |
| Refrigerating Capacity in Comparison | % (relative to R410A) | 112.1 | 51.4 | 110.8 | 69.1 | 95.2 | 90.0 | 90.0 |
| Pressure at Compressor Outlet in Comparison | % (relative to R410A) | 109.7 | 55.6 | 109.5 | 70.4 | 95.1 | 90.6 | 90.2 |
| ASHRAE Flammability/Non-flammability | - | Flammable | Non-flammable | Non-flammable | Non-flammable | Non-flammable | Non-flammable | Non-flammable |

Table 15 illustrates the case in which $CO_2$ is contained in an amount of 6.0 mass%.

Table 15

| Item | Unit | Comparative Example 9 | Comparative Example 10 | Comparative Example 11 | Comparative Example 12 | Example 5 | Example 6 | Example 7 |
|---|---|---|---|---|---|---|---|---|
| | | A | B | C | D | E | F | G |
| R32 | mass% | 63.4 | 0.0 | 59.2 | 24.5 | 50.1 | 36.4 | 39.5 |
| R125 | mass% | 30.6 | 7.5 | 34.8 | 0.0 | 25.8 | 20.8 | 15.0 |
| R134a | mass% | 0.0 | 86.5 | 0.0 | 69.5 | 18.1 | 36.8 | 39.5 |
| $CO_2$ | mass% | 6.0 | 6.0 | 6.0 | 6.0 | 6.0 | 6.0 | 6.0 |
| GWP | - | 1500 | 1500 | 1618 | 1159 | 1500 | 1500 | 1357 |
| COP in Comparison | % (relative to R410A) | 99.1 | 102.3 | 98.8 | 102.8 | 99.6 | 100.6 | 100.9 |
| Refrigerating Capacity in Comparison | % (relative to R410A) | 115.4 | 56.5 | 114.4 | 73.7 | 102.6 | 90.0 | 90.0 |
| Pressure at Compressor Outlet in Comparison | % (relative to R410A) | 113.8 | 61.8 | 113.7 | 75.6 | 102.9 | 91.6 | 90.9 |
| ASHRAE Flammability/Non-flammability | - | Flammable | Non-flammable | Non-flammable | Non-flammable | Non-flammable | Non-flammable | Non-flammable |

Table 16 illustrates the case in which $CO_2$ is contained in an amount of 8.0 mass%.

Table 16

| Item | Unit | Comparative Example 13 | Comparative Example 14 | Comparative Example 15 | Comparative Example 16 | Example 8 | Example 9 | Example 10 |
|---|---|---|---|---|---|---|---|---|
| | | A | B | C | D | E | F | G |
| R32 | mass% | 60.9 | 0.0 | 58.1 | 24.3 | 52.1 | 30.4 | 35.2 |
| R125 | mass% | 31.1 | 8.9 | 33.9 | 0.0 | 27.9 | 20.0 | 10.8 |
| R134a | mass% | 0.0 | 83.1 | 0.0 | 67.7 | 12.0 | 41.6 | 46.0 |
| $CO_2$ | mass% | 8.0 | 8.0 | 8.0 | 8.0 | 8.0 | 8.0 | 8.0 |
| GWP | - | 1500 | 1500 | 1579 | 1132 | 1500 | 1500 | 1273 |
| COP in Comparison | % (relative to R410A) | 98.4 | 101.7 | 98.2 | 102.1 | 98.6 | 100.1 | 100.7 |
| Refrigerating Capacity in Comparison | % (relative to R410A) | 118.7 | 61.9 | 118.1 | 78.3 | 110.0 | 90.0 | 90.0 |
| Pressure at Compressor Outlet in Comparison | % (relative to R410A) | 173.8 | 100.0 | 173.8 | 118.9 | 163.1 | 136.6 | 135.1 |
| ASHRAE Flammability/Non-flammability | - | Flammable | Non-flammable | Non-flammable | Non-flammable | Non-flammable | Non-flammable | Non-flammable |

Table 17 illustrates the case in which $CO_2$ is contained in an amount of 9.0 mass%.

Table 17

| Item | Unit | Comparative Example 17 | Comparative Example 18 | Comparative Example 19 | Comparative Example 20 | Example 11 | Example 12 | Example 13 |
|---|---|---|---|---|---|---|---|---|
| | | A | B | C | D | E | F | G |
| R32 | mass% | 59.7 | 0.0 | 57.6 | 24.3 | 53.1 | 27.4 | 33.0 |
| R125 | mass% | 31.3 | 9.6 | 33.4 | 0.0 | 28.9 | 19.6 | 8.7 |
| R134a | mass% | 0.0 | 81.4 | 0.0 | 66.7 | 9.0 | 44.0 | 49.3 |
| $CO_2$ | mass% | 9.0 | 9.0 | 9.0 | 9.0 | 9.0 | 9.0 | 9.0 |
| GWP | - | 1500 | 1500 | 1558 | 1118 | 1500 | 1500 | 1232 |
| COP in Comparison | % (relative to R410A) | 98.0 | 101.5 | 97.9 | 101.8 | 98.2 | 100.0 | 100.7 |
| Refrigerating Capacity in Comparison | % (relative to R410A) | 120.4 | 64.6 | 119.9 | 80.7 | 113.8 | 90.0 | 90.0 |
| Pressure at Compressor Outlet in Comparison | % (relative to R410A) | 120.0 | 70.8 | 120.0 | 83.2 | 114.5 | 93.2 | 92.0 |
| ASHRAE Flammability/Non-flammability | - | Flammable | Non-flammable | Non-flammable | Non-flammable | Non-flammable | Non-flammable | Non-flammable |

Table 18 illustrates the case in which $CO_2$ is contained in an amount of 4.0 mass% or 5.0 mass%.

Table 18

| Item | Unit | Comparative Example 21 | Comparative Example 22 | Example 14 | Comparative Example 23 | Comparative Example 24 | Example 15 | Example 16 |
|---|---|---|---|---|---|---|---|---|
| | | C' | D' | E'=G' | C' | D' | E' | G' |
| R32 | mass% | 58.5 | 21.0 | 42.6 | 58.0 | 20.1 | 43.6 | 40.4 |
| R125 | mass% | 37.5 | 0.0 | 21.6 | 37.0 | 0.0 | 22.7 | 19.4 |
| R134a | mass% | 0.0 | 75.0 | 31.8 | 0.0 | 74.9 | 28.7 | 35.2 |
| $CO_2$ | mass% | 4.0 | 4.0 | 4.0 | 5.0 | 5.0 | 5.0 | 5.0 |
| GWP | - | 1707 | 1214 | 1500 | 1687 | 1207 | 1500 | 1455 |
| COP in Comparison | % (relative to R410A) | 99.3 | 103.7 | 101.0 | 99.0 | 103.3 | 100.5 | 100.9 |
| Refrigerating Capacity in Comparison | % (relative to R410A) | 110.3 | 66.5 | 90.2 | 112.2 | 68.1 | 93.8 | 90.0 |
| Pressure at Compressor Outlet in Comparison | % (relative to R410A) | 109.4 | 68.1 | 90.7 | 111.5 | 70.2 | 94.5 | 90.9 |
| ASHRAE Flammability/Non-flammability | - | Non-flammable | Non-flammable | Non-flammable | Non-flammable | Non-flammable | Non-flammable | Non-flammable |

Table 19 illustrates the case in which $CO_2$ is contained in an amount of 6.1 mass%.

Table 19

| Item | Unit | Comparative Example 25 | Comparative Example 26 | Comparative Example 27 | Comparative Example 28 | Example 16 | Example 17 | Example 18 |
|---|---|---|---|---|---|---|---|---|
| | | A | B | C' | D' | E' | F | G' |
| R32 | mass% | 63.3 | 0.0 | 57.4 | 21.0 | 44.7 | 36.1 | 38.0 |
| R125 | mass% | 30.6 | 7.6 | 36.5 | 0.0 | 23.8 | 20.7 | 17.1 |
| R134a | mass% | 0.0 | 86.3 | 0.0 | 72.9 | 25.5 | 37.1 | 38.8 |
| $CO_2$ | mass% | 6.1 | 6.1 | 6.1 | 6.1 | 6.1 | 6.1 | 6.1 |
| GWP | - | 1500 | 1500 | 1665 | 1184 | 1500 | 1500 | 1410 |
| COP in Comparison | % (relative to R410A) | 99.0 | 102.2 | 98.7 | 102.9 | 99.9 | 100.5 | 100.8 |
| Refrigerating Capacity in Comparison | % (relative to R410A) | 115.5 | 56.8 | 114.2 | 71.4 | 97.7 | 90.0 | 90.0 |
| Pressure at Compressor Outlet in Comparison | % (relative to R410A) | 114.0 | 62.1 | 113.8 | 73.7 | 98.6 | 91.6 | 91.2 |
| ASHRAE Flammability/Non-flammability | - | Flammable | Non-flammable | Non-flammable | Non-flammable | Non-flammable | Non-flammable | Non-flammable |

Table 20 illustrates the case in which $CO_2$ is contained in an amount of 8.0 mass%.

Table 20

| Item | Unit | Comparative Example 29 | Comparative Example 30 | Example 19 | Example 20 | Example 21 | Example 22 | Example 23 | Example 24 |
|---|---|---|---|---|---|---|---|---|---|
| | | C' | D' | H | I | J | K | L | M |
| R32 | mass% | 56.4 | 20.8 | 36.0 | 38.4 | 42.3 | 43.6 | 39.3 | 41.3 |
| R125 | mass% | 35.6 | 0.0 | 22.0 | 17.6 | 24.3 | 22.8 | 23.2 | 20.5 |
| R134a | mass% | 0.0 | 71.2 | 34.0 | 36.0 | 25.4 | 25.6 | 29.5 | 30.2 |
| $CO_2$ | mass% | 8.0 | 8.0 | 8.0 | 8.0 | 8.0 | 8.0 | 8.0 | 8.0 |
| GWP | - | 1627 | 1159 | 1500 | 1390 | 1500 | 1458 | 1500 | 1428 |
| COP in Comparison | % (relative to R410A) | 98.1 | 102.2 | 99.7 | 100.0 | 99.2 | 99.3 | 99.4 | 99.6 |
| Refrigerating Capacity in Comparison | % (relative to R410A) | 117.7 | 75.8 | 95.0 | 95.0 | 100.8 | 101.1 | 98.0 | 98.4 |
| Pressure at Compressor Outlet in Comparison | % (relative to R410A) | 117.8 | 78.5 | 97.3 | 96.7 | 102.5 | 102.5 | 100.0 | 100.0 |
| ASHRAE Flammability/Non-flammability | - | Non-flammable | Non-flammable | Non-flammable | Non-flammable | Non-flammable | Non-flammable | Non-flammable | Non-flammable |

Table 21 illustrates the case in which $CO_2$ is contained in an amount of 9.0 mass%.

Table 21

| Item | Unit | Comparative Example 31 | Comparative Example 32 | Example 25 | Example 26 | Example 27 | Example 28 | Example 29 | Example 30 |
|---|---|---|---|---|---|---|---|---|---|
| | | C' | D' | H | I | J | K | L | M |
| R32 | mass% | 55.9 | 20.8 | 33.0 | 36.4 | 38.6 | 41.2 | 35.6 | 39.0 |
| R125 | mass% | 35.1 | 0.0 | 21.6 | 15.6 | 23.6 | 20.4 | 22.5 | 18.2 |
| R134a | mass% | 0.0 | 70.2 | 36.4 | 39.0 | 28.8 | 29.4 | 32.9 | 33.8 |
| $CO_2$ | mass% | 9.0 | 9.0 | 9.0 | 9.0 | 9.0 | 9.0 | 9.0 | 9.0 |
| GWP | - | 1606 | 1144 | 1500 | 1349 | 1500 | 1413 | 1500 | 1384 |
| COP in Comparison | % (relative to R410A) | 97.8 | 101.9 | 99.5 | 99.9 | 99.0 | 99.2 | 99.3 | 99.5 |
| Refrigerating Capacity in Comparison | % (relative to R410A) | 119.5 | 78.2 | 95.0 | 95.0 | 100.1 | 100.7 | 97.4 | 98.1 |
| Pressure at Compressor Outlet in Comparison | % (relative to R410A) | 119.9 | 81.1 | 97.8 | 97.1 | 102.5 | 102.5 | 100.0 | 100.0 |
| ASHRAE Flammability/Non-flammability | - | Non-flammable | Non-flammable | Non-flammable | Non-flammable | Non-flammable | Non-flammable | Non-flammable | Non-flammable |

Table 22 illustrates the case in which $CO_2$ is contained in an amount of 6.7 mass%.

Table 22

| Item | Unit | Comparative Example 33 | Comparative Example 34 | Comparative Example 35 | Comparative Example 36 | Example 31 | Example 32 | Example 33 | Example 34 |
|---|---|---|---|---|---|---|---|---|---|
| | | A | B | C' | D' | H | I | J | K |
| R32 | mass% | 62.5 | 0.0 | 57.1 | 21.0 | 39.8 | 41.1 | 44.1 | 44.5 |
| R125 | mass% | 30.8 | 8.0 | 36.2 | 0.0 | 22.5 | 20.2 | 24.1 | 23.6 |
| R134a | mass% | 0.0 | 85.3 | 0.0 | 72.3 | 31.0 | 32.0 | 25.1 | 25.2 |
| $CO_2$ | mass% | 6.7 | 6.7 | 6.7 | 6.7 | 6.7 | 6.7 | 6.7 | 6.7 |
| GWP | - | 1500 | 1500 | 1652 | 1176 | 1500 | 1442 | 1500 | 1487 |
| COP in Comparison | % (relative to R410A) | 98.8 | 102.1 | 98.5 | 102.7 | 100.0 | 100.1 | 99.6 | 99.7 |
| Refrigerating Capacity in Comparison | % (relative to R410A) | 116.5 | 58.4 | 115.3 | 72.8 | 95.0 | 95.0 | 98.9 | 99.0 |
| Pressure at Compressor Outlet in Comparison | % (relative to R410A) | 115.2 | 63.9 | 115.1 | 75.2 | 96.5 | 96.2 | 100.0 | 100.0 |
| ASHRAE Flammability/Non-flammability | - | Flammable | Non-flammable | Non-flammable | Non-flammable | Non-flammable | Non-flammable | Non-flammable | Non-flammable |

Description of the Reference Symbols

1: ignition source
2: sample inlet
3: springs
4: 12-liter glass flask
5: electrodes
6: stirrer
7: insulated chamber
10: refrigerating machine
11: refrigerant circuit
12: compressor
13: heat-source-side heat exchanger
14: expansion mechanism
15: user-side heat exchanger
16: fan
17: electromagnetic valve
18: four-way switching valve
19: heating means
20: bypass flow path
A: a compositional ratio when GWP is 1500, and the concentration of R134a (mass%) is 0 mass%.
B: a compositional ratio when GWP is 1500, and the concentration of R32 (mass%) is 0 mass%.
C: a compositional ratio on the ASHRAE non-flammability border line, when the concentration of R134a (mass%) is 0 mass%.
D: a compositional ratio on the ASHRAE non-flammability border line, when the concentration of R125 (mass%) is 0 mass%.
E: a point of intersection between line segment AB and line segment CD.
F: a compositional ratio when GWP is 1500, and the refrigerating capacity relative to that of R410A is 90%.
G: a compositional ratio on the ASHRAE non-flammability border line, when the refrigerating capacity relative to that of R410A is 90%.
C': a compositional ratio on the ASHRAE non-flammability limit line that takes into account 3.5 mass% of the concentration of the non-flammable refrigerant R125 as a safety factor, and when the concentration of R134a (mass%) is 0 mass%.
D': a compositional ratio on the ASHRAE non-flammability limit line that takes into account 3.5 mass% of the concentration of the non-flammable refrigerant R125 as a safety factor, and when the concentration of R125 (mass%) is 0 mass%.
E': a point of intersection between line segment AB and line segment C'D'.
G': a compositional ratio on the ASHRAE non-flammability limit line that takes into account 3.5 mass% of the concentration of the non-flammable refrigerant R125 as a safety factor, and when the refrigerating capacity relative to that of R410A is 90%.
H: a compositional ratio when GWP is 1500, and the refrigerating capacity relative to that of R410A is 95%.
I: a compositional ratio on the ASHRAE non-flammability limit line that takes into account 3.5 mass% of the concentration of the non-flammable refrigerant R125 as a safety factor, and when the refrigerating capacity relative to that of R410A is 95%.
J: a compositional ratio when GWP is 1500, and the pressure at the compressor outlet relative to that of R410A is 102.5%.
K: a compositional ratio on the ASHRAE non-flammability limit line that takes into account 3.5 mass% of the concentration of the non-flammable refrigerant R125 as a safety factor, and when the pressure at the compressor outlet relative to that of R410A is 102.5%.
L: a compositional ratio when GWP is 1500, and the pressure at the compressor outlet relative to that of R410A is 100%.
M: a compositional ratio on the ASHRAE non-flammability limit line that takes into account 3.5 mass% of the concentration of the non-flammable refrigerant R125 as a safety factor, and when the pressure at the compressor outlet relative to that of R410A is 100%.

**Claims**

1. A composition comprising a refrigerant,

the refrigerant comprising $CO_2$, R32, R125, and R134a, wherein
when the mass% of $CO_2$, R32, R125, and R134a based on their sum in the refrigerant is respectively x, a, b, and c, coordinates (a,b,c) in a ternary composition diagram in which $2.7 \leq x < 6.0$, and the sum of R32, R125, and R134a is (100-x) mass% fall within a triangular region surrounded by line segments that connect the following points:

point E ($-0.0781x^2+1.8309x+41.926$, $1.1194x+19.094$, 100-a-b-x),
point F ($-3x+54.4$, $-0.3945x+23.17$, 100-a-b-x), and
point G ($-2.0597x+51.853$, $-2.1514x+27.908$, 100-a-b-x),

or on the line segments, or
coordinates (a,b,c) in a ternary composition diagram in which $6.0 \leq x < 9.0$, and the sum of R32, R125, and R134a is (100-x) mass% fall within a triangular region surrounded by line segments that connect the following points:

point E ($x+44.1$, $1.0357x+19.593$, 100-a-b-x),
point F ($-3x+54.4$, $-0.4x+23.2$, 100-a-b-x), and
point G ($-2.1643x+52.493$, $-2.1x+27.6$, 100-a-b-x),

or on the line segments.

2. A composition comprising a refrigerant,

the refrigerant comprising $CO_2$, R32, R125, and R134a, wherein
when the mass% of $CO_2$, R32, R125, and R134a based on their sum in the refrigerant is respectively x, a, b, and c, coordinates (a,b,c) in a ternary composition diagram in which $4.0 \leq x \leq 6.0$, and the sum of R32, R125, and R134a is (100-x) mass% fall within a triangular region surrounded by line segments that connect the following points:

point E' ($x+38.6$, $1.0468x+17.431$, 100-a-b-x),
point F ($-3x+54.4$, $-0.3945x+23.17$, 100-a-b-x), and
point G' ($-2.1903x+51.358$, $-2.142x+30.148$, 100-a-b-x),

or on the line segments, or
coordinates (a,b,c) in a ternary composition diagram in which $6.0 \leq x < 6.1$, and the sum of R32, R125, and R134a is (100-x) mass% fall within a triangular region surrounded by line segments that connect the following points:

point E' ($x+38.6$, $1.0468x+17.431$, 100-a-b-x),
point F ($-3x+54.4$, $-0.4x+23.2$, 100-a-b-x), and
point G' ($-2.1903x+51.358$, $-2.142x+30.148$, 100-a-b-x),

or on the line segments.

3. A composition comprising a refrigerant,

the refrigerant comprising $CO_2$, R32, R125, and R134a, wherein
when the mass% of $CO_2$, R32, R125, and R134a based on their sum in the refrigerant is respectively x, a, b, and c, coordinates (a,b,c) in a ternary composition diagram in which $8.0 \leq x < 9.0$, and the sum of R32, R125, and R134a is (100-x) mass% fall within a quadrangular region surrounded by line segments that connect the following points:

point J ($-1.1x+51.1$, $-3.9x+55.5$, 100-a-b-x),
point K ($-0.9x+50.8$, $-4.3x+57.2$, 100-a-b-x),
point H ($-2.9549x+59.61$, $-0.391x+25.122$, 100-a-b-x), and
point I ($-2.0451x+54.79$, $-2x+33.6$, 100-a-b-x),

or on the line segments.

4.  A composition comprising a refrigerant,

    the refrigerant comprising $CO_2$, R32, R125, and R134a, wherein
    when the mass% of $CO_2$, R32, R125, and R134a based on their sum in the refrigerant is respectively x, a, b, and c, coordinates (a,b,c) in a ternary composition diagram in which $6.7 \leq x < 9.0$, and the sum of R32, R125, and R134a is (100-x) mass% fall within a quadrangular region surrounded by line segments that connect the following points:

    point L ($1.4749x^2-25.374x+147.89$, $-1.8729x^2+26.839x-71.649$, 100-a-b-x),
    point M ($0.7224x^2-13.081x+99.713$, $-0.8328x^2+9.8572x-5.0599$, 100-a-b-x),
    point H ($-2.9549x+59.61$, $-0.391x+25.122$, 100-a-b-x), and
    point I ($-2.0451x+54.79$, $-2x+33.6$, 100-a-b-x),

    or on the line segments.

5.  The composition according to any one of claims 1 to 4, comprising R32, R125, R134a, and $CO_2$ in a total amount of 99.5 mass% or more based on the entire refrigerant.

6.  The composition according to any one of claims 1 to 5, comprising a refrigerant oil.

7.  The composition according to any one of claims 1 to 6, wherein the refrigerant is used as an alternative refrigerant for R410A.

8.  A refrigerating machine comprising the composition according to any one of claims 1 to 7.

9.  The refrigerating machine according to claim 8, comprising a heat exchanger in which a flow of the refrigerant and a flow of an external heat medium are in countercurrent flow.

10. The refrigerating machine according to claim 8 or 9, comprising a heat-source-side heat exchanger and a user-side heat exchanger, wherein when the user-side heat exchanger functions as an evaporator, the evaporating temperature of the refrigerant is 0°C or below.

11. A refrigerating machine comprising
    a refrigerant comprising

    at least one fluorinated hydrocarbon selected from the group consisting of difluoromethane (R32), pentafluoroethane (R125), 1,1,1,2-tetrafluoroethane (R134a), 2,3,3,3-tetrafluoropropene (R1234yf), and 1,3,3,3-tetrafluoro-1-propene (R1234ze), and
    carbon dioxide ($CO_2$); and

    a heat exchanger in which a flow of the refrigerant and a flow of an external heat medium are in countercurrent flow.

12. A refrigerating machine comprising
    a refrigerant comprising

    at least one fluorinated hydrocarbon selected from the group consisting of difluoromethane (R32), pentafluoroethane (R125), 1,1,1,2-tetrafluoroethane (R134a), 2,3,3,3-tetrafluoropropene (R1234yf), and 1,3,3,3-tetrafluoro-1-propene (R1234ze), and
    carbon dioxide ($CO_2$);

    a heat-source-side heat exchanger; and
    a user-side heat exchanger,
    wherein when the user-side heat exchanger functions as an evaporator, the evaporating temperature of the refrigerant is 0°C or below.

Fig.1

Fig.2

(a)

External Heat Medium

Refrigerant    Refrigerant

(b)

External Heat Medium

Refrigerant

Fig.3

(a)                                    (b)

Y →

← X

External Heat Medium

External Heat Medium

Refrigerant

Refrigerant

Fig.4

External Heat Medium

External Heat Medium

External Heat Medium

Fig.5

External Heat Medium

External Heat Medium

External Heat Medium

Fig.6

Fig.7

Fig.8

External Heat
Medium

Outside Air

13

15

16

External Heat
Medium

10

12

11

Fig.9

External Heat
Medium

19

14    17

External Heat
Medium

13

15

External Heat
Medium

16

External Heat
Medium

10

12

11

Fig.10

Fig.11

Fig.12

Fig.13

Fig.14

Fig.15

Fig.16

Fig.17

Fig.18

Fig.19

Fig.20

Fig.21

Fig.22

Fig.23

Fig.24

Fig.25

## INTERNATIONAL SEARCH REPORT

| International application No. |
| --- |
| PCT/JP2018/045757 |

A.  CLASSIFICATION OF SUBJECT MATTER
Int.Cl.  C09K5/04(2006.01)i, F25B1/00(2006.01)n

According to International Patent Classification (IPC) or to both national classification and IPC

B.  FIELDS SEARCHED

Minimum documentation searched (classification system followed by classification symbols)
Int.Cl.  C09K5/04, F25B1/00

Documentation searched other than minimum documentation to the extent that such documents are included in the fields searched
Published examined utility model applications of Japan        1922–1996
Published unexamined utility model applications of Japan      1971–2019
Registered utility model specifications of Japan              1996–2019
Published registered utility model applications of Japan      1994–2019

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X | JP 2013-533896 A (MEXICHEM AMANCO HOLDING S.A. DE | 12 |
| Y | C.V.) 29 August 2013, claims 1-72, tables 1-89 & | 11 |
| A | US 2013/0119299 A1, claims 1-75, tables 1-82 & GB | 1-10 |
| | 2480517 A & WO 2011/144909 A2 & EP 2571953 A1 & DE | |
| | 102010053785 A & FR 2960241 A & AU 2011254380 A & | |
| | CA 2799840 A1 & MX 2012013313 A & KR 10-2013- | |
| | 0082095 A & RU 2012155280 A | |

☒  Further documents are listed in the continuation of Box C.         ☐  See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| 08 March 2019 (08.03.2019) | 19 March 2019 (19.03.2019) |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2018/045757

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2015-145452 A (ASAHI GLASS CO., LTD.) 13 August 2015, paragraph [0034] (Family: none) | 11 |
| Y | JP 10-68560 A (MATSUSHITA ELECTRIC INDUSTRIAL CO., LTD.) 10 March 1998, claims 1-3, paragraphs [0003]-[0004], [0015]-[0028] (Family: none) | 11 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 5783341 A
- WO 6062061 A